Europäisches Patentamt

European Patent Office

Office européen des brevets

(19)

(11) **EP 0 821 359 A1**

## (12) EUROPEAN PATENT APPLICATION
published in accordance with Art. 158(3) EPC

(43) Date of publication:
28.01.1998 Bulletin 1998/05

(21) Application number: 97902610.1

(22) Date of filing: 07.02.1997

(51) Int. Cl.$^6$: **G11B 20/10**, G11B 20/12

(86) International application number:
PCT/JP97/00308

(87) International publication number:
WO 97/30446 (21.08.1997 Gazette 1997/36)

(84) Designated Contracting States:
DE FR NL

(30) Priority: 13.02.1996 JP 25259/96
14.02.1996 JP 27122/96
12.03.1996 JP 54293/96
13.03.1996 JP 85911/96
15.04.1996 JP 118533/96
17.04.1996 JP 95117/96
26.04.1996 JP 106708/96
31.05.1996 JP 137926/96
14.06.1996 JP 153569/96

(71) Applicant:
MATSUSHITA ELECTRIC INDUSTRIAL CO., LTD
Kadoma-shi, Osaka 571 (JP)

(72) Inventors:
• KURANO, Yukio
Higashiosaka-shi, Osaka 579 (JP)
• YAMADA, Masazumi
Moriguchi-shi, Osaka 570 (JP)
• IKETANI, Akira
Higashiosaka-shi, Osaka 577 (JP)
• MATSUMI, Chiyoko
Suita-shi, Osaka 565 (JP)
• MURAKAMI, Yuuzou
Osaka-shi, Osaka 535 (JP)
• ONO, Tadashi
Tsuzuki-gun, Kyoto 610-03 (JP)

(74) Representative:
Grünecker, Kinkeldey,
Stockmair & Schwanhäusser
Anwaltssozietät
Maximilianstrasse 58
80538 München (DE)

(54) **DATA RECORDING APPARATUS, DATA REPRODUCTION APPARATUS, DATA RECORDING METHOD AND DATA REPRODUCTION METHOD**

(57)  A data recording apparatus for recording data on a magnetic tape has an input data identifying means for identifying input data and outputting an input data identification signal; a recording pattern generation means for selecting a recording pattern of input data depending on the input data identification signal; a recording means for recording said input data on a magnetic tape according to the recording pattern generated by the recording pattern generation means.

Fig. 1

EP 0 821 359 A1

## Description

### Technical Field

The present invention relates to a data recording apparatus and method for recording data in blocks and a data reproduction apparatus and method for reproducing data.

### Background Art

The recent improvement of digital signal processing techniques has served to realize equipment for digitally recording image signals; one example of such equipment is a digital VCR (hereafter referred to as a "DVC").

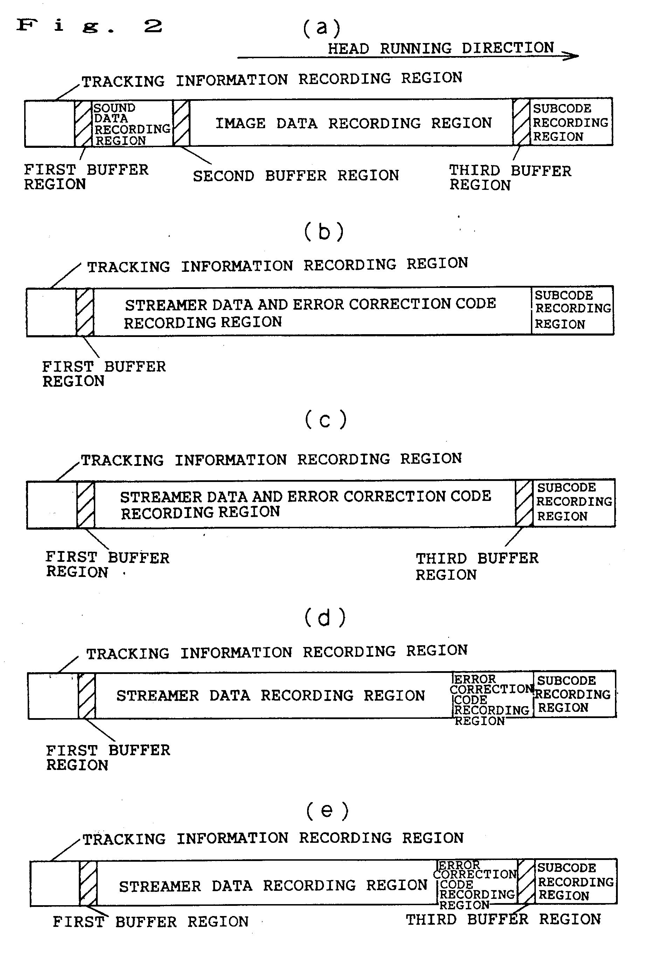

In a DVC, an image signal input from an input terminal is subjected to an A/D conversion if it is analog and not if it is digital, and then subjected to filtering, relocation, compression, and addition of supplementary data before it is output as image data. An input sound signal is subjected to an A/D conversion if it is analog and not if it is digital, and then subjected to filtering and relocation as well as compression and addition of supplementary data as required before it is output as sound data. Subsequently, an error correction code is added to the image and sound data, a synchronizing pattern and an address are added to each recording block, and a track pattern is generated and modulated before the data is finally recorded on a magnetic tape through a recording head. An example of the track pattern is shown in FIG. 2(a). Each track comprises a tracking information recording area, a first gap area, a sound data recording area, a second gap area, an image data recording area, a third gap area, and a subcode recording area.

Due to its low costs per unit storage capacity, the magnetic tape is a medium that can easily realize functions as a streamer on which a large amount of data is recorded. An example of the magnetic tape is a digital data storage (DDS) that uses a digital audio tape (DAT) as a streamer.

The following problems, however, occur if a DVC track pattern is directly used as a streamer.

In image and sound data, data in near frames are similar and if an error occurs in any frame, the data in a previous frame with no error can be used to make the error insignificant. Data in a streamer (hereafter referred to as "streamer data"), however, has a weak correlationship among the data and it is difficult to correct errors as in images and sounds. Thus, to record streamer data, the error correction capability must be improved instead of increasing image or sound data that can be recorded.

Although there is a demand for a further increase in the storage capacity of the streamer, the storage capacity cannot be increased easily by simply applying a DVC track format.

When data in a file is accessed if there are no restrictions on the correlationship between logical packet numbers and recorded data management information or on the physical recording layout of packets, then the packets recording volume, partition, directory, and file management information are each searched for to identify the number of the packet on which the file is recorded. In this case, the overall tape must be accessed to search for each management information.

It is an object of this invention to provide a tape medium recording method that is operative prior to the recording on a magnetic tape of management information and recorded data for each hierarchy, for determining the physical layout on the magnetic tape and to record the management information in predetermined positions or ranges, thereby enabling the file data to be accessed and rewritten easily.

In a conventional data recording apparatus, data externally sent in packets is recorded by being partitioned into blocks. If, for example, a single packet has a length of N bytes and a single block has a length of M bytes (N > M) and N representing the length of the packet is an integral multiple of M representing the length of the block, the data in a single packet is stored in at least $G (= N/M)$ blocks. If, however, N is not an integral multiple of M, the data is stored in at least $L (= (int (N/M) + 1))$ blocks. int (N/M) in this equation indicates the integral part of N divided by M and int is a mathematical abbreviation indicating an integral part. As a result, in the L-th block, data in the next packet is recorded on the T-th ( $T = N - M \times L$ ) and subsequent bytes.

Thus, data from the two packets are mixed in the L-th block L on which data has been recorded by a conventional data recording apparatus. That is, the beginning data of the subsequent packet is recorded in the middle of the L-th block L. In addition, the mixture of data from two packets in a single packet may also occur for the data in the subsequent packets. To specify a particular packet in the data recorded in such a mixed form, a track, a block, and a byte numbers must all be specified. Consequently, in the conventional data recording apparatus, the configuration of a file allocation table (FAT) may be complicated or a large amount of locational information on the track, the block and the byte may be required to access a specified packet, resulting in the complicated configuration of a circuit for mathematic calculations.

This invention is provided to solve this problem and its object is to simplify the locational relationship between input data in packets and recorded data in blocks to simplify mathematic processing for locational information.

In addition, if the last packet of data corresponds to the M-th packet in the frame (M < N), the remaining (N - M) packet regions remain empty, so dummy packets are recorded in these regions. There is no other way but to create and record dummy packets because the tape consists of frames, but during the subsequent recording, the operation of reproducing this frame and overwriting the dummy packets is a heavy burden on the tape device and the recording desirably starts with a new frame with the dummy packets unprocessed. Consequently, even if the packets are read during reproduction, it cannot be determined whether they are transmitted data or dummies.

In addition, when data encoded according to MPEG (Motion Picture Expert Group) is to be recorded and if the bit rate of transmitted data is lower than the rate at which it is recorded on a recording medium, the rate must be adjusted by inserting dummy packets. In this case, however, there is no means for determining whether it is transmitted data packet or dummy packet. In addition, there is either no means for changing the transfer rate during reproduction in response to a change in the data rate in the middle of the data.

In view of this problem of such a conventional recording apparatus, it is an object of this invention to provide a data recording apparatus that can determine during reproduction whether the data is valid or dummy to output only valid data and that can change the transfer rate in response to a change in the data rate.

If data is recorded on the magnetic tape in tracks, the number of transferred blocks that can be recorded in a track group recording region consisting of any number of tracks is fixed. If the numbers of the transferred blocks recorded in each recording region are in the ascending order and the number of the first transferred block recorded in each track group recording region is known, the numbers of the other transferred blocks recorded on the same track can be determined. Thus, information on the numbers of the other transferred blocks are redundant as signals recorded on the magnetic tape.

In particular, if the magnetic tape is used as a recording medium, conventional data recording systems require a large amount of time to reach a target file due to the low random access performance of the magnetic tape. In addition, it is difficult to rewrite management information if data has been recorded. Moreover, if, during the time from the loading of a tape cassette until its unloading, a deck recording and reproduction section is stopped or the data recording apparatus is disconnected from a PC, the correspondence between the data and management information written to the magnetic tape may become incorrect.

In conventional data recording apparatuses, when data is transferred in the order of volumes v1, v2, ..., vn, these volumes are recorded from the leading position of the magnetic tape toward its terminal position. The data recorded on the data is assumed to be reproduced. If, for example, volume vn is to be reproduced, that region on the magnetic tape in which volume vn is recorded is unknown, so the recorded leading position of volume vn must be detected while reproducing the magnetic tape from its leading position.

To determine whether each recorded volume is of a read-only, a readable/writable, or an additionally recorded type, the magnetic tape must be reproduced up to the leading position of that volume.

If additional data is recorded on an already recorded volume as files, it is unknown whether or not a sufficient recording region to record the files physically exists within the recording region of the volume.

If a volume is to be recorded on the magnetic tape, it is unknown whether or not there is a sufficient region on the magnetic tape to record the volume.

If information on individual volumes such as the recording date and time and name of each volume recorded on the magnetic tape is assumed to be first management information, this information cannot be collectively managed. Thus, recording and reproduction processing may become cumbersome.

In addition, conventional data recording and reproduction apparatuses has a fixed reproduction speed for all the volumes recorded on the recording medium. Consequently, the reproduction speed cannot be varied for individual volumes.

In addition, if volume data is to be transferred, the volume is divided into a plurality of transferred blocks with a fixed length for transfer.

Data can be copied between multiple recording and reproduction apparatuses, for example, between hard discs or between a hard disc and a floppy disc. Data can also be copied within the same recording and reproduction apparatus.

In data recording apparatuses, the overall recorded data is likely to become invalid even if the reproduction of a very small part, for example, one bit of the data becomes impossible. Thus, it is reasonable to reproduce and inspect data after recording and to re-record the data in order to prevent the above problem. In such processing, however, data that does not actually need to be re-recorded is re-recorded each time re-recording becomes necessary, so the recording medium is used wastefully.

In addition, conventional data reproduction apparatuses execute reading and receiving processing regardless of the type of data including image and sound data and data from computers. Thus, data is read or received whether or not it is allowed to be read under copyright. As a result, the data cannot be managed appropriately.

In view of such a problem of conventional apparatuses, it is an object of this invention to provide a data reproduction apparatus that can manage data more appropriately compared to the prior art.

Disclosure of the Invention

It is an object of this invention to provide a method for increasing the recording capacity and improving the error correction capability when recording streamer data on a magnetic tape.

It is another object of this invention to provide a data recording apparatus that can record a plurality of volume data and can collectively record volume management information on each volume in a predetermined position of a recording medium. It is yet another object of this invention to provide a data reproduction apparatus that can reproduce desired volume data at a high speed based on the volume management information recorded in the recording medium. It is still another object of this invention to use these apparatuses to enable image and sound data to be retrieved easily from each volume in order to prevent redundant data from being recorded on the recording medium that is a storage medium, thereby enabling more volume data to be recorded and reproduced.

It is still another object of this invention to provide a data recording method that enables management information or data on the recording medium to be retrieved easily or re-written easily if additional data has been recorded in order to correctly maintain the correspondence between the data and management information written to the recording medium.

It is still another object of this invention to provide a data management method and apparatus that controls the copying of data between a data recording and reproduction apparatus such as a DVD or DVC that uses data with copy management information and a data recording and reproduction apparatus that uses data without copy management information.

To achieve these objects, a data recording apparatus of the first present invention for recording data on a magnetic tape has an input data identifier for identifying input data and outputting an input data identification signal, a recording pattern generator for selecting a recording pattern of said input data depending on said input data identification signal, and a recorder for recording said input data on said magnetic tape according to the recording pattern generated by said recording pattern generator.

Further a recording pattern is such that a track on the magnetic tape is divided into a tracking information recording region and a main recording region and wherein the main recording region is divided into one or more regions.

A recording pattern is formed by dividing a main recording region into an image and a sound regions and a buffer region therebetween or assigning data and error correction codes to the main recording region, according to a first invention.

When streamer data is recorded on a magnetic tape, this configuration abolishes conventional buffer regions to increase recordable regions and the recording capacity and to improve the error correction capability. In addition, the size of an additional circuit for realizing a streamer function can be reduced by applying an existing DVCR recording pattern to allow tracking information and subcode recording regions to be shared by a DVCR circuit.

In addition, this invention is characterized in that it includes a block conversion means for converting input data with a length N from a single packet into L blocks with a length M shorter than the length N, and

a recording means for executing predetermined signal processing on data in blocks obtained from the block conversion means to record the processed data on the recording medium.

Due to this configuration, the present data recording apparatus can constantly convert data from a single packet into a specified number of blocks for recording to significantly reduce the amount of locational information used to specify packets recorded on the recording medium, thereby simplifying the locational relationship between input data in packets and recorded data in blocks.

A data recording apparatus of the present invention has a dummy data generator for generating dummy data; and a recorder for converting data input in packets with a specified packet size M into blocks with a specified size N, storing said input data blocks converted into blocks with said specified block size N, in storage areas each comprising K2 blocks, and if, during the storage, the number of blocks obtained by converting said specified data size of input data is K3 (<K2), allowing said dummy data generator to generate dummy data corresponding to (K2 - K3) blocks to store it in the free area of said storage area.

A data recording apparatus of the present invention has a dummy data generator for generating dummy data; and a recorder for inserting dummy data generated by said dummy data generator among said input data so that the input rate at which data is input in a specified data size unit will be equal to the recording rate at which the data is recorded on a recording medium if the former is lower than the latter.

In each of the above configurations, if the recording means adds a flag to each packet indicating that input data is valid while dummy data is invalid, it can be determined during reproduction whether or not the data is valid.

In addition, this invention is a data recording apparatus to which image and sound data are input in blocks with block numbers and which divides the image and sound data into volumes that are the maximum division unit in recording and reproducing the image and sound data on and from a recording medium, characterized in that it comprises a second management information creation means operative when information used for managing the image and sound data in each volume is first management information, for creating and updating as second management information a combination of the first management information and information retrieved from each volume data; a transferred block number deletion means operative when image and sound data in blocks are input, for removing the first of (x) continuous blocks to delete a recording region for block numbers; a recorded block number generation means for treating the (x) blocks output from the transferred block number deletion means as a group of blocks and adding a block group number to the beginning of the group of blocks; and a data storage means for recording the plurality of volume data on the recording medium in an arbitrary part together with the number of the group of blocks and also recording the second management information output from the second management information creation means on the recording medium in a particular part.

According to this configuration, when data is transferred through an interface circuit, the second management information creation means compiles the first management information inserted into the beginning of each volume to create and update second management information. When each volume data is divided into blocks and then input, the transferred block number deletion means removes the first of the (x) continuous blocks to delete the recording region for block numbers. The recorded block number generation means treats the (x) blocks output from the transferred block number deletion means as a group of blocks and adding a block group number to the beginning of the group of blocks. The data storage means records the plurality of volume data on the recording medium in an arbitrary part together with the number of the group of blocks and also records the second management information output from the second management information creation means on the recording medium in a particular part. This increases the data recording region by the recording region for block numbers deleted.

In addition, this invention is a data recording method in a digital data recording system comprising a data recording apparatus for recording data on a recording medium and a controlling apparatus for transmitting and receiving data to and from the data recording apparatus and operating and controlling the apparatus, comprising:

transferring management information on data recorded on the recording medium when the data recording apparatus has been used, to a storage section of the controlling apparatus for storage; when additionally recording or modifying data in the recording medium, modifying management information of the data to be additionally recorded or changed, on the storage section of the controlling apparatus; and once the use of the data recording apparatus has been finished, transferring to the data recording apparatus the latest management information held in the storage section of the controlling apparatus that has a higher access and read rates than the recording medium in the data recording apparatus and that is non-volatile and rewriting the management information on the recording medium.

In addition, this invention is a data reproduction method characterized in that it is operative when reproducing the data recorded on the recording medium using the data recording method, for extracting information on the recorded position of specified data from the management information held in the storage section of the controlling apparatus and based on the extracted information on the recorded position, reproducing the specified data from the recording medium.

According to this method, if data is recorded on a tape-like recording medium via the controlling apparatus or data on the recording medium is modified, the outline and recorded position of the data on the recording medium can be retrieved easily without transferring the recording medium to the relevant position because management information on each data has been transferred to the storage section of the controlling apparatus. This improves the operability of data recording apparatuses that use a tape-like recording medium that lacks accessibility.

In addition, this invention is a data recording method for recording all management information in a specified position of a recording medium in a specified format and recording the data, characterized in that, during data reproduction, the method extracts information on the recorded position of a specified volume from the second management information in the recording medium and based on the extracted information on the recorded position, reproduces the first management information on the specified volume from the recording medium.

According to this configuration, the data storage means records a combination of first management information and information retrieved from each volume data on the recording medium as the second management information together with each volume data. When particular volume data is obtained from the data storage means, the second management information output means first reads the second management information recorded in a particular part of the recording medium and based on this management information, provides an instruction to the data storage means to reproduce desired volume data from the recording medium. This increases the outline retrieval and the data access rates when reading arbitrary volume data from the data storage means.

A data recording apparatus of the present invention for recording digital data has at least a reproduction means for reproducing said digital data immediately after recording; a checking means for checking the reproduced data; a holding means for holding those data which are determined to have been recorded incorrectly or information on those data; and a controller for allowing a reproduction operation to be performed after all said digital data have been recorded and until said data or information held in said holding means is determined to have been reproduced correctly.

A data recording apparatus of the present invention has a recording/reproduction signal converter and a head to record digital data, including at least a controller for checking after all said digital data have been recorded whether or not they have been recorded correctly and allowing a re-recording operation to be performed until those data which are determined to be unable to be reproduced correctly is determined to be able to be reproduced correctly.

In accordance with this invention, only data that has suffered an error during recording is re-recorded to allow data to be recorded correctly without using the recording medium wastefully.

A data reproduction apparatus of the present invention has a reading means for reading data and the data type information and/or copy management information on this data when reading this data from a data storage medium including a data region for storing data and an additional information region for storing as additional information, data type information used to identify the type of the stored data and copy management information used to manage the copying of the stored data;

a determination means for determining based on the contents of the read-out data type information and/or copy management information whether or not to add to said read-out data, all or part of said additional information corresponding to said data; and an output controller using the results of the determination by said determination means to control the external output of said read-out data and said additional information through the switching means.

This invention thus has an additional information area for each sector with a specified length which includes data type information indicating the type of data located in a data region within the sector and copy management information of the data to enable the output of the data to be controlled depending on the data type information.

Brief Description of the Drawings

FIG. 1 is a block diagram describing a first embodiment of this invention;
FIG. 2(a) is a conceptual drawing describing a track pattern of a conventional DVC;
FIG. 2(b) is a conceptual drawing describing an example of a track pattern used when both streamer data and error correction codes are recorded;
FIG. 2(c) is a conceptual drawing describing an example of a track pattern used when both streamer data and error correction codes are recorded and when subcodes can be after-recorded;
FIG. 2(d) is a conceptual drawing describing an example of a track pattern used when streamer data and error correction codes are separately recorded;
FIG. 2(e) is a conceptual drawing describing an example of a track pattern used when streamer data and error correction codes are separately recorded and when subcodes can be after-recorded;
FIG. 3 is a block diagram describing a second embodiment of this invention;
FIG. 4 is a block diagram showing a data recording apparatus according to a third and a fourth embodiments of this invention;
FIG. 5 is a block diagram showing a data recording apparatus according to a fifth embodiment of this invention;
FIG. 6 is a block diagram showing a data recording apparatus according to a sixth embodiment of this invention;
FIG. 7 shows a conversion of input data packets into recorded data blocks in the data recording apparatus according to the third embodiment of this invention;
FIG. 8 shows a layout of input data packets on a track in the data recording apparatus according to the third embodiment of this invention;
FIG. 9 shows a layout of input data packets on a track in the data recording apparatus according to the fourth embodiment of this invention;
FIG. 10 shows a layout of input data packets on a track in the data recording apparatus according to the fourth embodiment of this invention;
FIG. 11 shows an example of a layout of data and dummy packets in a frame in the data recording apparatus according to the fourth, the fifth, or the sixth embodiment of this invention;
FIG. 12 shows an example of insertion of dummy packets during MPEG data recording in the data recording apparatus according to the fourth, the fifth, or the sixth embodiment of this invention;
FIG. 13 shows the configuration of a data recording and reproduction system according to a seventh embodiment of this invention;
FIG. 14 describes a recording region for data recorded on a recording medium according to a seventh embodiment of this invention;
FIG. 15 shows the configuration of a data recording apparatus according to an eighth embodiment of this invention;
FIG. 16 shows the internal configuration of a second management information generator in the data recording apparatus according to the eighth embodiment of this invention;
FIG. 17 is a signal arrangement diagram in which the storage region of a storage medium is divided into a second management information recording region and volume recording regions;
FIG. 18 shows the configuration of a data reproduction apparatus according to a ninth embodiment of this invention;
FIG. 19 shows the internal configuration of a second management information generator in the data recording apparatus according to the ninth embodiment of this invention;

FIG. 20 shows the configuration of the data recording apparatus according to the tenth embodiment of this invention;

FIG. 21 shows a signal arrangement diagram of a storage medium in which data is recorded using the data recording apparatus according to the tenth embodiment of this invention;

FIG. 22 shows the configuration of a data reproduction apparatus according to an eleventh embodiment of this invention;

FIG. 23 describes a layout of data on a recording medium after conversion by the seventh embodiment of this invention;

FIG. 24 is a block diagram of a data recording apparatus according to a twelfth embodiment of this invention;

FIG. 25 shows an example of a condition in which data is recorded according to the twelfth embodiment of this invention;

FIG. 26 is a block diagram showing a data recording apparatus according to a thirteenth embodiment of this invention;

FIG. 27 is a block diagram showing a data recording apparatus according to a fourteenth embodiment of this invention;

FIG. 28 shows the configuration of a data converter according to the fourteenth embodiment of this invention; and

FIG. 29 shows the configuration of data in a sector according to the fourteenth embodiment of this invention.

Best Mode for Carrying Out the Invention

Embodiments of this invention are described below with reference to the drawings.

Components with the same reference numerals have the same configuration and functions.

(First Embodiment)

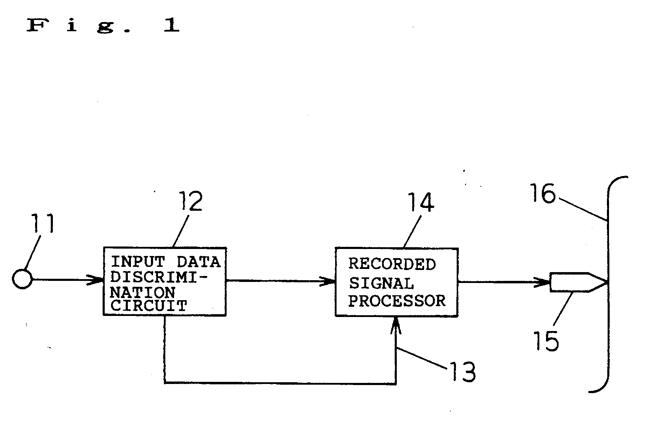

FIG. 1 is a block diagram describing a first embodiment. In FIG. 1, 11 is a data input terminal; 12 is an input data discrimination circuit; 13 is a data identification signal; 14 is a recorded signal processor; 15 is a recording head; and 16 is a magnetic tape.

This embodiment is described below with reference to FIG. 1.

Data input from the data input terminal 11 is input to the input data discrimination circuit 12. The input data discrimination circuit 12 outputs input data to the recorded signal processor 14 and identifies the type of input data to output the data identification signal 13. Output from the input data discrimination circuit 12 and the data identification signal 13 are input to the recorded signal processor 14 and subjected to processing such as appropriate error correction encoding, track pattern generation, or modulation depending on the data identification signal 13. If, for example, image or sound data subjected to MPEG compression is input, it is subjected to processing compatible with the encoding, whereas if streamer data is input, it is subjected to another suitable processing. The input data is subsequently recorded on the magnetic tape 16 through the recording head 15 according to a track pattern generated by the recorded signal processor 14.

FIG. 2 describes a track pattern generated by the recorded signal processor 14. FIG. 2(a) shows a DVC track pattern such as that described in the prior art. A sound and an image data recording regions and a second and a third buffer regions constitute a main recording region. FIG. 2(b) describes an example of a streamer track pattern. A tracking information recording and a first buffer regions are common to FIG. 2(a). The sound and the image data recording regions and the second and the third buffer regions constitute a streamer data and error correction code recording region. That is, this is the main recording region.

As described above, according to this embodiment, if streamer data is input, the buffer regions are abolished to increase the region in which data can be recorded. The streamer data or error correction codes can be recorded in this region to increase the amount of streamer data per track or to improve the error correction capability.

If subcodes must be after-recorded, the third buffer region may be set in front of a subcode recording region as shown in FIG. 2(c).

FIG. 2(d) is another example of a streamer track pattern. In this example, the main recording region of each track is divided into two pieces, in each of which streamer data and error correction codes are recorded. By providing the third buffer region in front of the subcode recording region as shown in FIG. 2(e), subcodes can be after-recorded.

Streamer data input according to this embodiment includes any data such as MPEG and JPEG data and programs. Streamer data and error correction codes can be arbitrarily recorded and the capacity can be arbitrarily assigned.

Similar effects can be obtained whether or not the configuration of the subcode recording region of FIG. 2(b) is the same as in FIG. 2(a).

(Second Embodiment)

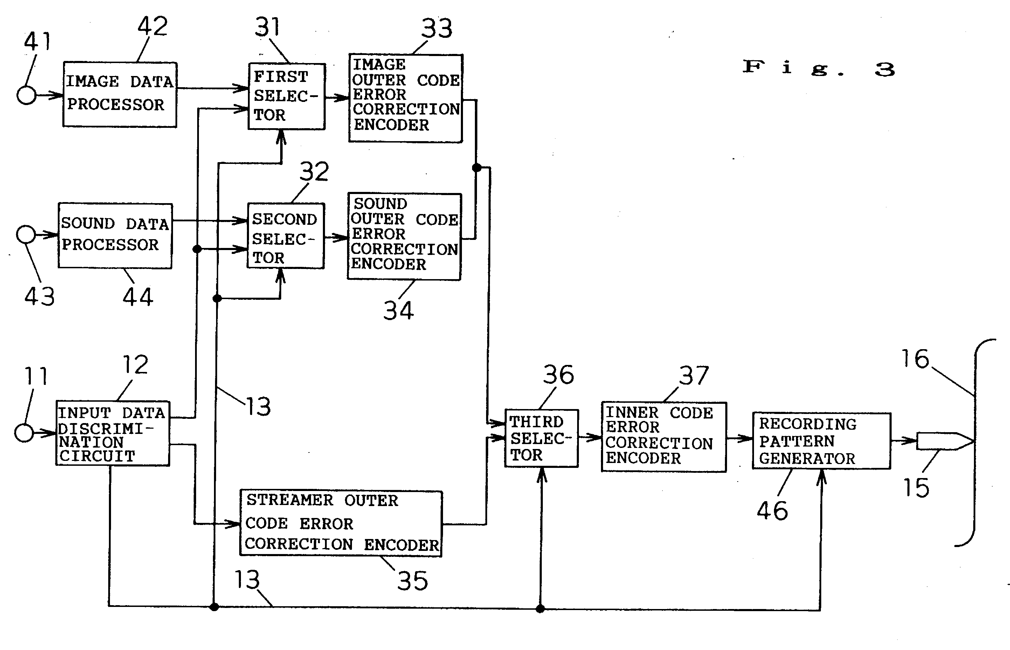

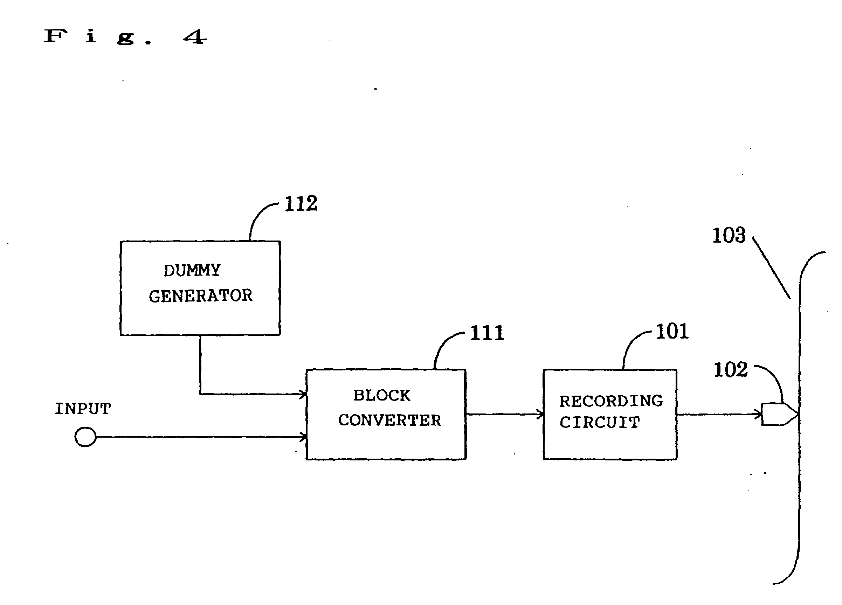

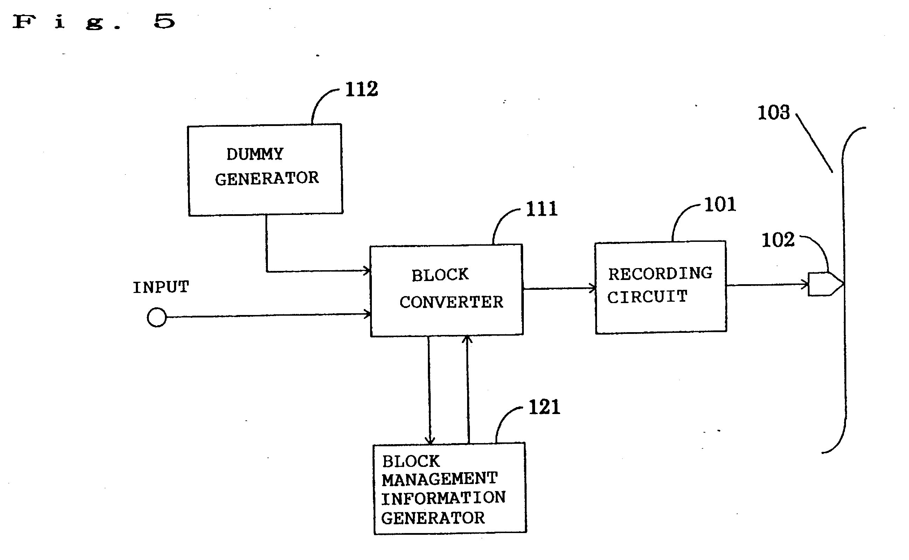

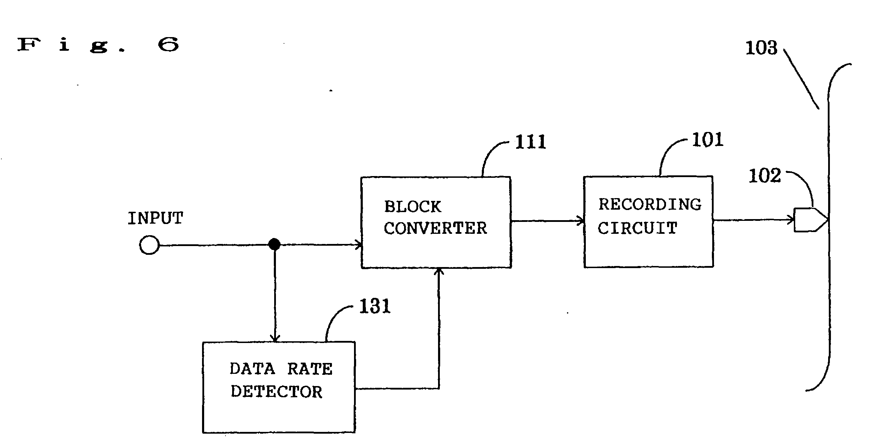

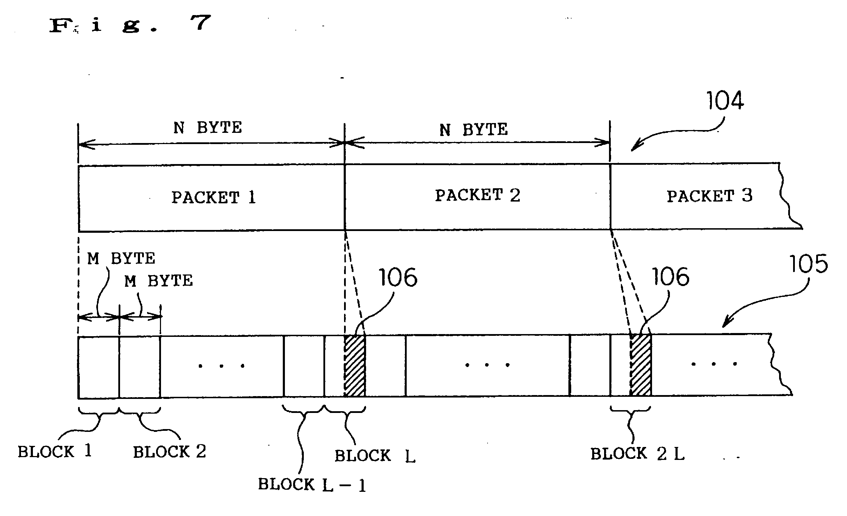

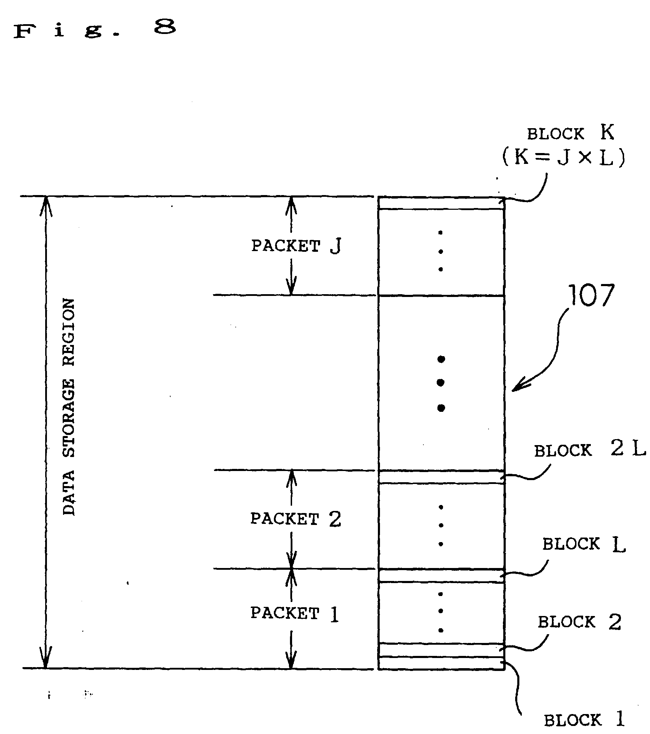

FIG. 3 is a block diagram describing a second embodiment of this invention. In this figure, 11 is the data input terminal; 12 is the input data discrimination circuit; 13 is the data identification signal; 15 is the recording head; 16 is the magnetic tape; 31 is a first selector; 32 is a second selector; 33 is an image outer code error correction encoder; 34 is a sound outer code error correction encoder; 35 is a streamer outer code error correction encoder; 36 is a third selector; 37 is an inner code error correction encoder; 41 is an image input terminal; 42 is an image data processor; 43 is a sound input terminal; 44 is a sound data processor; and 46 is a recording pattern generator. In accordance with this embodiment, normal image and sound signals that have not been subjected to data processing can be input and recorded, and this single data recording apparatus can be used to record both normal image and sound signals and digital data from computers. The streamer outer code error correction encoder 35, the inner code error correction encoder 37, and the recording pattern generator 46 correspond to the recorded signal processor 14 in FIG. 1.

This embodiment is described below with reference to FIG. 3. According to this embodiment, image, sound, or streamer data subjected to predetermined processing such as compression is input from the data input terminal 11, and normal image and sound signals are input from the image input terminal 41 and the sound input terminal 43. Input is obtained from the data input terminal 11, or either the image input terminal 41 or the sound input terminal 43.

When data is input from the data input terminal 11, the input data discrimination circuit 12 identifies the type of data to output the data identification signal 13. In accordance with this embodiment, if image or sound data is input, the data identification signal will be "1,"while if streamer data is input, the data identification signal will be "2." Image and sound data already subjected to processing are supplied to the first selector 31 and the second selectors 31 and 32, respectively. Streamer data is supplied to the streamer outer code error correction encoder 35, in which outer code parities are added to the data.

When a normal image and a normal sound signals are input to the image input terminal 41 and the sound input terminal 43, the image signal input from the image input terminal 41 is subjected to predetermined processing such as compression by the image data processor 42 and then supplied to the first selector 31. The sound signal input from the sound input terminal 43 is subjected to predetermined processing by the sound data processor 44 and then supplied to the second selector 32. At this point, no data is input from the data input terminal 11 and the input data discrimination circuit 12 outputs "0" as the data identification signal 13.

The first selector 31 selects the output from the image data processor 42 when the data identification signal 13 is "0," and selects the image data output from the input data discrimination circuit 12 when the data identification signal 13 is "1" before supplying the data to the image outer code error correction encoder 33. The image outer code error correction encoder 33 adds outer code parities to the data. Likewise, the second selector 32 selects the output from the sound data processor 44 when the data identification signal 13 is "0," and selects the sound data output from the input data discrimination circuit 12 when the data identification signal 13 is "1" before supplying the data to the sound outer code error correction encoder 34. The image outer code error correction encoder 34 adds outer code parities to the data.

Next, when the data identification signal 13 is "0" or "1," the third selector 36 selects the outputs from the image outer code error correction encoder 33 and the sound outer code error correction encoder 34, multiplies them, and supplies the result to the inner code error correction encoder 37. The inner code error correction encoder 37 adds inner code parities to the data. The recording pattern generator 46 generates for the data to which inner code parities have been added a track pattern (for example, the pattern shown in FIG. 2(a)) suitable to image and sound data, and modulates the data. The modulated data is recorded on the magnetic tape 16 through the recording head 15.

When the data discrimination signal 13 is "2," the third selector 36 selects output from the streamer outer code error correction encoder 35 and supplies this data to the inner code error correction encoder 37. The inner code error correction encoder 37 adds inner code parities to the data. The recording pattern generator 46 generates for the data to which inner code parities have been added a track pattern (for example, the pattern shown in FIG. 2(b)) suitable to streamer data, and modulates the data. The modulated data is recorded on the magnetic tape 16 through the recording head 15.

As described above, the second embodiment of this invention allows inner code parities to be shared by both images and sounds and streamer to restrain increases in circuits. Outer code error corrections are separately executed for image, sound, and streamer data to provide error correction capabilities more suitable to the respective types of data.

(Third Embodiment)

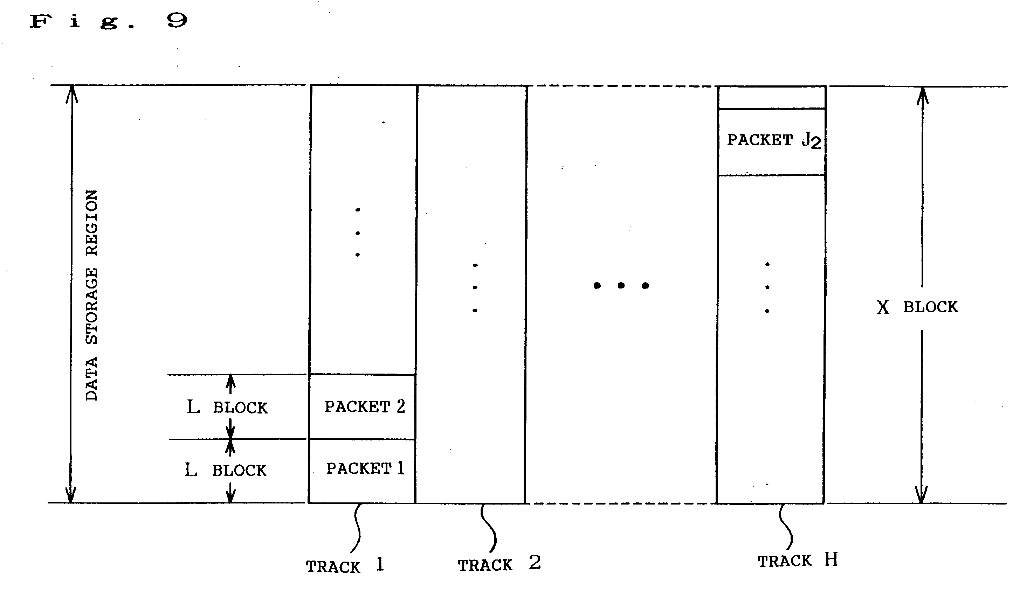

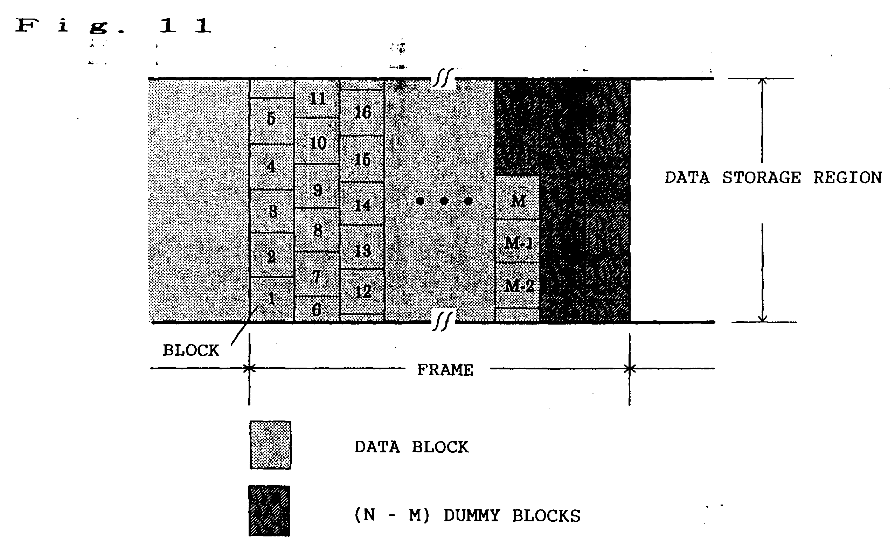

FIG. 4 is a block diagram showing the configuration of a data recording apparatus according to a third embodiment. FIG. 7 describes a conversion from input data in packets into recorded data in blocks in the data recording apparatus according to the third embodiment. FIG. 8 is a layout drawing of data in packets recorded on a track using the data recording apparatus according to the third embodiment. In the third embodiment, the data recording apparatus that records input data in packets on a tape that is a recording medium is described as an example of this invention.

As shown in FIG. 4, the data recording apparatus according to the third embodiment comprises a block converter 111, a dummy generator 112, a recording circuit 101, a head 102, and a tape 103 that is a recording medium. Data input to the data recording apparatus in packets is input to the block converter 111. The block converter 111 converts the input data into a plurality of blocks with a specified length. In this case, if a single packet has a length of N bytes and a single block has a length of M bytes (N > M), L blocks ( L > N/M ) are assigned to a single packet. According to this embodiment, N is not an integral multiple of M and L is an integer.

As shown in FIG. 7, input data 104 in packets is converted into recorded data 105 in blocks by the block converter 111, and the first packet 1 of the input data 104 is sequentially stored in the blocks starting with the first block 1 and ending with the L-th block L. When the last data of the packet is stored in the L-th block L, the T bytes ( T = N - (M × L) ) of the L-th block L remaining free after the storage of the last data are filled with dummy data 106 generated by the dummy generator 112. For the subsequent packets, L blocks are similarly used to store input data in packets and the dummy data 106.

The recorded data 105, which has been converted into data in blocks by the block converter 111, is output to the recording circuit 101. The recording circuit 101 adds synchronizing data, ID data, and error correction data to each block. The recording circuit 101 modulates these data into recording signals suitable to recording on the tape 103. The recording signals output from the recording circuit 101 are recorded by the head 102 in a data recording region on a track of the tape 103. Thus, the position of a particular packet can be specified using two types of data, that is, a track and a block numbers as locational information, and byte numbers, which have been required in conventional apparatuses, are unwanted. Consequently, the data recording apparatus according to this embodiment can indicate a simplified relationship between input data in packets and data in blocks corresponding to the packets.

When the block converter 111 stores the data from a single packet in L blocks, dummy data is recorded in the T-byte ( T = N - (M × L) ) region in the L-th block L. The recording of supplementary data instead of dummy data is described below.

Supplementary data that is recorded in the L-th block L includes management data on packets, for example, numbers indicating the order of input data, numbers indicating the order of the packets within input data, or numbers indicating the order of the packets relative to the beginning of the tape. By recording management data in blocks, information on the packet, for example, the order of the packet within the input data can be obtained.

In addition, the T bytes that are not required to record the input data can be divided into L regions each of which is assigned to each block so that a number indicating the order of the block relative to the packet can be added to each assigned region.

If the block converter 111 attempts to assign a minimum number of blocks to a single packet, the number of blocks L is set so that L = int (N/M) + 1 . That is, the number of blocks L is obtained by dividing N by M and adding 1 to the integral part of the quotient. Thus, the input data can be recorded efficiently on a track of the tape, thereby increasing the amount of data that can be recorded on the tape.

If the recording circuit 101 locates blocks in such a way that K blocks will be recorded on a single track, then J packets ( J = int (K/L) ) will be located on a single track. Thus, the position of the packet on the tape that is a recording medium can be specified using two types of numeral data, that is, a track number and a packet number indicating the position of the packet when recorded on the track. Since the position of the packet can be specified using only the track and the packet numbers, the amount of data for locational information can be reduced to simplify the configuration of a circuit for mathematic processing.

FIG. 8 shows a layout of data in packets stored in a data recording region on a track 107 wherein the number of blocks on a single track K ( K = J × L ) is an integral multiple of the number of blocks corresponding to a single packet L.

If the length N of a single packet in the input data 104 in packets is 2,064 bytes and the length M of a single block is 77 bytes, the data in each packet is converted into 27 (= int (2064/77) + 1) blocks. In addition, if the number of blocks located on a single track K is 135, five (= int (135/27)) packets are constantly located on a single track. As a result, the packet number can be indicated by three bits and the amount of data for locational information is reduced.

As described above, the configuration of the third embodiment can reduce the amount of data for locational information required to specify a particular packet in order to simplify mathematic processing required to identify a specified packet when accessing the packet during reproduction. As a result, the scale of the circuit for the mathematic processing can be reduced.

This embodiment has been described in conjunction with the length N of a single packet that is not an integral multiple of the length M of a single block. If, however, the length N of a packet is an integral multiple of the length M of a block, the data from a single packet is stored in G blocks ( G = N/M ; G is an integer) to simplify the locational relationship between input data in packets and recorded data in blocks as in the first embodiment.

In accordance with the present data recording apparatus, if a single packet is assumed to have the length L and a single block is assumed to have the length M, the block converter sets the number of blocks L into which a single packet is converted at the integral part of a value obtained by dividing N by M and counting as a whole number the fraction of the quotient.

(Fourth Embodiment)

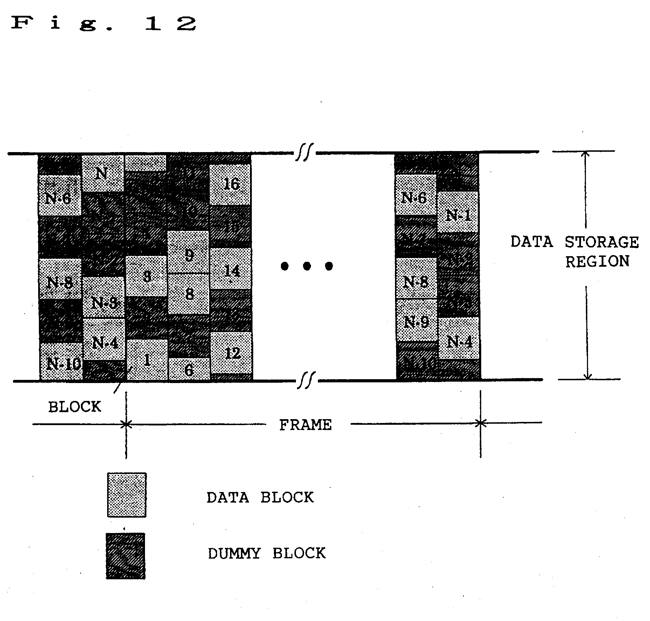

FIG. 9 is a layout drawing of packets on tracks in a data recording apparatus according to a fourth embodiment of this invention. FIG. 10 is a layout drawing of packets on tracks in the data recording apparatus according to the fourth embodiment of this invention wherein a single frame comprises three tracks. The tracks shown in FIG. 9 are generally used and indicate two recording regions, that is, an image recording region and a sound signal recording region.

The data recording apparatus has the same configuration as in the third embodiment. The data recording apparatus according to the fourth embodiment also assigns input data in packets to recorded data in blocks in the same manner as in the third embodiment. Furthermore, this embodiment allows supplementary data to be stored in the L-th block as in the third embodiment.

In the fourth embodiment, X blocks are recorded on a single track and H tracks constitute a single frame.

The data recording apparatus according to this embodiment can record $K2 (= H \times X)$ blocks on a single frame and locate $J2 (= int (K2/L))$ packets that are to be converted into L blocks.

For example, the number of blocks per track is increased by 9 to 144 compared to 135 in the third embodiment. Since 9 blocks are added per track, 27 blocks are added to three tracks. Thus, the number of these added blocks is equal to the number L (27) of blocks into which a single packet is converted. If the number of tracks in a single frame H is 3, the number of packets per frame J2 is just 16 (= $(144 \times 3)/27$). FIG. 10 shows a layout of packets on three tracks. Since a single frame comprises three tracks in this manner, frame numbers can be used instead of track numbers for locational information to specify packets. Since the number of frames per tape is one-third of the number of tracks, if the tape allows data to be recorded on about 5 million tracks, the number of frames is 1.7 million and a frame number specifying these frames can consist of 21 bits.

In addition, since the number of packets per frame J2 is 16 (00 to 15), the amount of data required for a packet number is 4 bits. The number 16 is the third power of 2 and enables all the 4-bit data to be assigned to prevent redundant use.

Thus, the data recording apparatus according to the fourth embodiment can specify a particular packet using a frame and a packet numbers, thereby significantly reducing the amount of data for locational information compared to conventional apparatuses.

The data recording apparatus according to the fourth embodiment can prevent an error caused by dropout by executing error corrections and interleaving within a frame.

The data recording apparatus according to the fourth embodiment has been described in conjunction with the case in which the number of tracks per frame is 3. If, however, the number of tracks per frame H is doubled to six, and if, for example, the length N of a single packet is assumed to be 2,064 bytes and the length M of a single block is assumed to be 77 bytes, the number of packets per frame J3 is 32 (int $144 \times 77 \times 6/2064$). In this case, since the number of frames per tape is half compared to the above example (the number of tracks per frame H = 3), a frame number indicating a frame is represented by 20-bit data. In addition, since the number of packets per frame J3 is 32 (00 to 31), the amount of data required to represent a packet number is 5 bits. The number 32 is the fourth power of 2 and enables all the 5-bit data to be assigned to prevent redundant use.

If the number of tracks per frame H is further doubled to 12, and if the length N of a single packet is assumed to be 2,064 bytes and the length M of a single block is assumed to be 77 bytes, the number of packets per frame J4 is 64. In this case, since the number of frames per tape is half compared to the above case in which the number of tracks per frame H is 6, the number of bits required to represent a frame number indicating a frame is 19. In addition, since the number of packets per frame J4 is 64, the amount of data required to represent a packet number is 6 bits. The number 64 is the fifth power of 2 and enables all the 6-bit data to be assigned to prevent redundant use.

If this configuration is used to record input data in packets on a recording medium, the amount of data for locational information required to specify a position in which the data in a particular packet is recorded can be reduced to simplify mathematic processing required to access a specified packet during reproduction.

Next, a method for adding a flag distinguishing between a data block and a dummy block is explained. The block converter 111 converts input data and a dummy sent from the dummy generator 112 into blocks. At this point, the block converter adds a valid flag to the header of an input data block and an invalid flag to the header of a dummy block. In this case, at least one bit may be added. Thus, during reproduction, those blocks on which valid data is recorded can be selected to output only the input data.

A method for inserting dummy blocks is explained below. Each block subjected to processing by the block converter 111 is further subjected to processing such that a group of N blocks are recorded on a tape as a single frame. At this point, input data is sequentially stored in the blocks within the frame. The data, which is converted into blocks, is assumed to have been stored up to the M-th block (M < N) within the frame. Dummy blocks generated by the dummy generator 112 are then stored in the (N - M) blocks to fill the frame with the N blocks. This operation enables data to be recorded on the tape in frames.

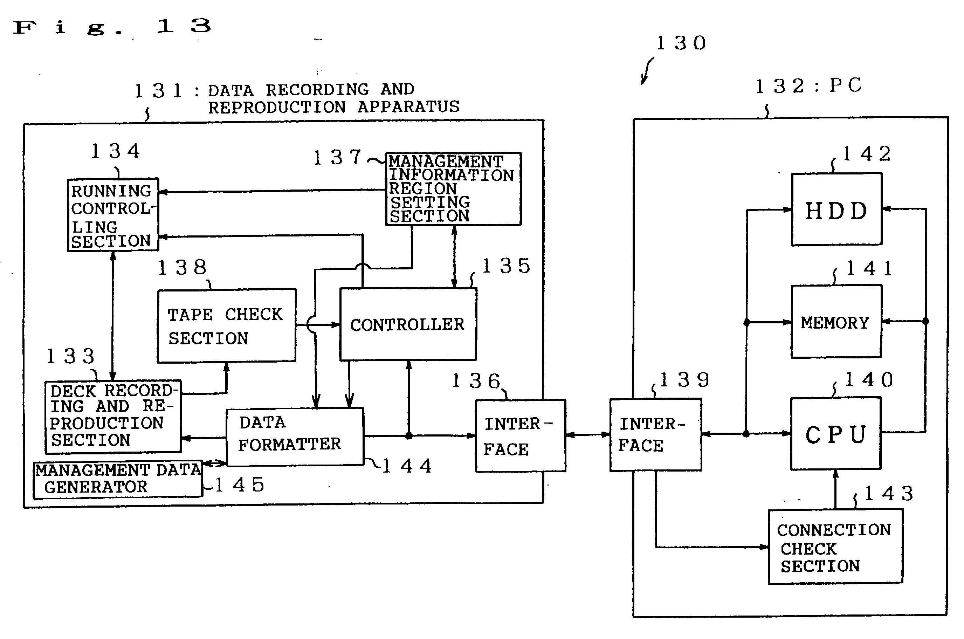

These dummy blocks must also be inserted if data encoded using an MPEG method is recorded. According to MPEG, the transfer data rate is generally determined by the sender and there are multiple data rates, so this rate may be lower than the recording rate at which data is recorded on the tape. Thus, to increase the transmitted data rate close to the recording rate, the block converter 111 inserts dummy blocks among the data blocks as shown in FIG. 12. Thus, if MPEG data with a data rate lower than the recording rate is input, the recording can be adapted to the recording rate.

Although the data recording apparatus according to each embodiment of this invention has been described with the tape as a recording medium, the techniques provided by this invention are applicable to other recording media such as discs and the layout of recorded blocks is not limited to the layouts in the above embodiments.

If there are multiple packet lengths in the input data, the block converter may detect the length N of the packet to determine the number of blocks L in the packet based on the detected length N, thereby obtaining effects similar to those in the above embodiments.

In addition, although the fourth embodiment has been described in conjunction with the case in which the number of tracks per frame H is 3, 6, and 12, the data recording apparatus according to this invention is not limited to these numbers and similar effects can be obtained by setting an arbitrary number.

In addition, dummy blocks may be inserted if data encoded using a method other than the MPEG method as in the above embodiments is recorded.

The header added to the recorded block may be arbitrary data, and the header may be added to an arbitrary position other than the beginning of the block as described above.

(Fifth Embodiment)

FIG. 5 shows a block diagram of a data recording apparatus according to a fifth embodiment of this invention. The data recording apparatus according to the fifth embodiment comprises the recording circuit 101, the head 102, the tape 103, the block converter 111, and the dummy generator 112 which have the same configurations as in the third and fourth embodiments, with a block management information generator 121 added.

First, data partitioned into pieces with a specified length is input to the block converter 111. The block converter 111 adds a header to each data with a specified length and converts them into blocks. In addition, the dummy generator 112 generates dummy blocks and sends the generated dummy blocks out to the block converter 111. The block converter 111 then converts the dummies into blocks and inserts them among the data blocks as required. At this point, the blocks are stored in frames each comprising a group of N blocks.

According to this embodiment, the position of each block is fixed relative to each frame. This configuration eliminates the need to add a block number to each block within a frame and the positions of all the blocks can be determined as long as a block number is assigned only to the first block. In addition, information indicating whether a block within a frame is valid data or a dummy is managed in frames. The block management information generator 121 generates the number of the first block of each frame and information required to determine whether a block within a frame is valid data or a dummy. If, for example, data blocks are filled in a frame starting from the beginning or the end of the frame, the block management information must indicate only the number of blocks of valid data. Consequently, the amount of required data can be reduced. Alternatively, a bit map used to determine whether or not each block is valid may be provided.

The data and dummies converted into blocks by the block converter 111 and the block management information are output to the recording circuit 101. The recording circuit 101 converts each block into a block that is a recording unit on the tape. At this point, a single packet is stored in a specified number of blocks. The recording circuit adds synchronizing data, ID data, and error correction data to each block. It then modulates the data in these blocks into signals suitable to recording. The signals output from the recording circuit 101 are recorded in a recording region of the tape 103 via the head 102.

In this case, the blocks can be managed more easily by recording the block management information, for example, in the header of the first block within the frame.

This configuration eliminates the need to add a flag used to determine the number of each block and whether the block is valid data or a dummy, thereby enabling a larger amount of data to be recorded. Each block can also be managed in frames. The amount of information required to access a block can also be reduced.

In the fifth embodiment, similar effects can be obtained using another block management information such as the number of the last block of valid data within the frame.

In addition, although the fifth embodiment records the block management information in the header of the first block within the frame, this information may be recorded in the header of an arbitrary block or a data recording region other than the block recording region.

(Sixth Embodiment)

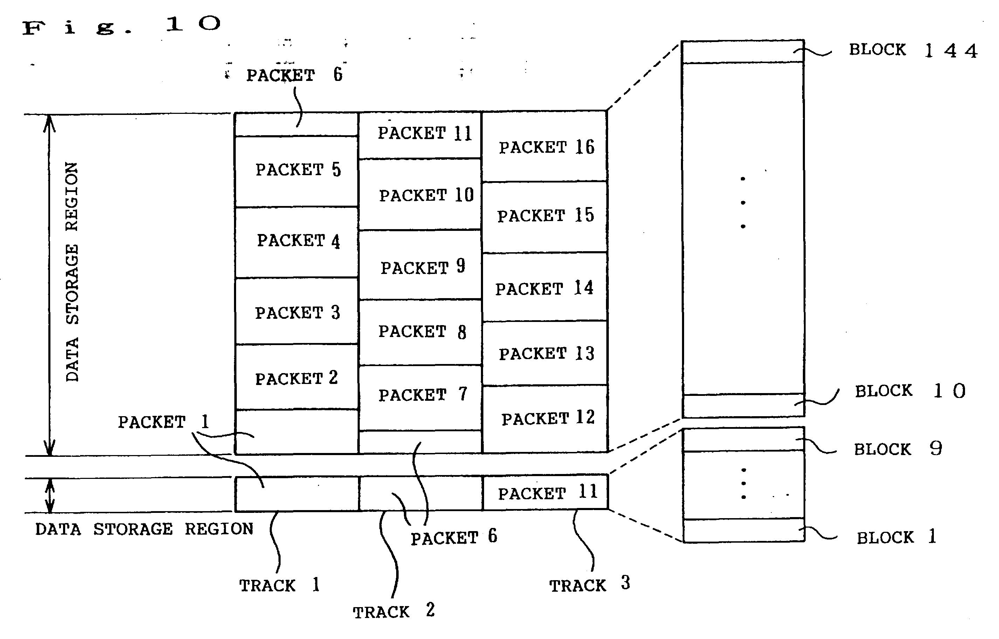

A sixth embodiment is described by taking as an example a data recording apparatus that records input data on a tape as in the third and the fourth embodiments. FIG. 6 shows a block diagram of a data recording apparatus according to a sixth embodiment of this invention. The data recording apparatus according to this embodiment comprises the recording circuit 101, the head 102, the tape 103, and the block converter 111 which have the same configurations as in the first embodiment, except that it does not include a dummy generator and that a data rate detector 131 is added as an input rate detector.

First, data partitioned into pieces with a specified length is input to the block converter 111 and the data rate detector 131. The block converter 111 converts the data with a specified length into blocks by adding a header to each block. In addition, the data rate detector 131 counts the input data to detect its data rate and outputs this information to the block converter 111 for each data with a specified length. The data rate information includes, for example, the maximum rate that the data recording apparatus can record data, or its half or quarter value. Alternatively, data rate information such as an integral multiple of the maximum rate may be provided and added to provide for a possible increase in headers of the data recording apparatus resulting in an increase in the recording rate.

Next, the block converter 111 adds to the input data the data rate information obtained from the data rate detector 131 to convert the resultant data into blocks. The data and data rate information converted into blocks by the block converter 111 is output to the recording circuit 101. The recording circuit 101 converts each block into a block that is a recording unit on the tape. At this point, a single packet is stored in a specified number of blocks. The recording circuit adds synchronizing data, ID data, and error correction data to each block. It then modulates the data in these blocks into signals suitable to recording. The signals output from the recording circuit 101 are recorded in a recording region of the tape 103 via the head 102.

If data with its data rate changing in its middle is to be recorded and reproduced, the above configuration can cope with such a change. It can also transfer data encoded using the MPEG method, to a decoder at an appropriate rate.

Although the sixth embodiment uses as the data rate information, the maximum rate that the data recording apparatus can record data, its half or quarter value, or its integral multiple that is required to provide for a possible increase in heads of the data recording apparatus resulting in an increase in the recording rate, this information may include any other value.

In addition, although none of the above embodiments have explained the reproduction side, the reproduction side must only be able to detect and identify a flag indicating whether or not data is valid, or packet management or data rate information and to neglect data if, for example, the flag indicates that it is invalid. Alternatively, it must only be able to control the data transfer rate depending on the data rate information.

In addition, although the above embodiments have been described in conjunction with the specified data size as frames, the data size unit in which N blocks are stored is not limited to this aspect.

(Seventh Embodiment)

FIG. 13 is a block diagram showing the configuration of a data recording and reproduction system 130 according to this embodiment. The data recording and reproduction system 130 comprises a data recording and reproduction apparatus 131 for recording and reproducing digital data and a personal computer (PC) 132 acting as a controlling apparatus.

As in conventional examples, the data recording and reproduction apparatus 131 includes a deck recording and reproduction section 133, a running controlling section 134, a controller 135, and an interface 136. In addition to these components, this embodiment includes a management information region setting section 137 and a tape check section 138. The management information region setting section 137 sets a recording region for management information on a magnetic tape, and operates the running controlling section 134 in response to an instruction from the controller 135 when the management information is to be recorded or updated. The tape check section 138 detects whether or not a magnetic tape has been loaded in the deck recording and reproduction section 133, and the results of the detection are output to the controller 135.

The PC 132 includes an interface 139, a CPU 140, a memory 141, and an HDD 142. In addition to these components, this embodiment includes a connection check section 143 that can detect whether or not the data recording and reproduction apparatus 131 and the PC 132 are connected together correctly.

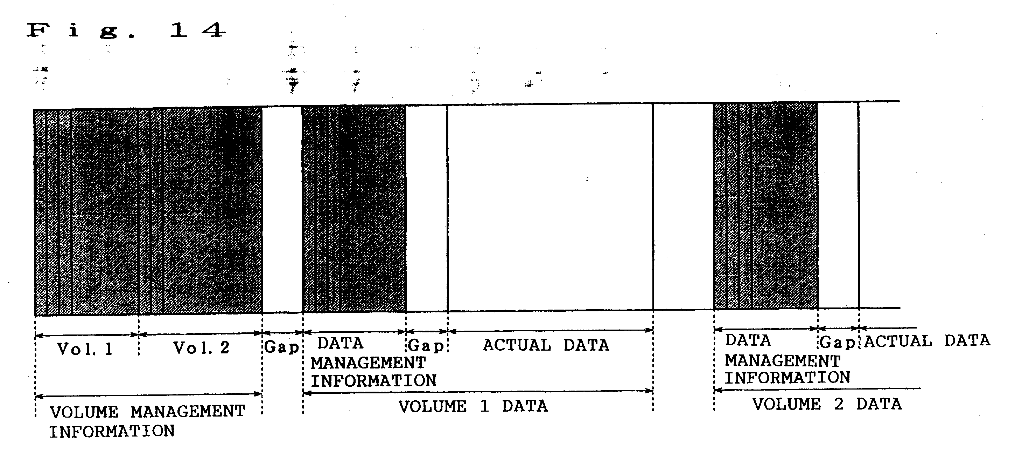

The operation of the data recording system according to this embodiment configured as described above is described below. When a magnetic tape that is a recording medium is loaded in the deck recording and reproduction section 133, the tape check section 138 detects that a tape cassette has been inserted into the tape recording and reproduction apparatus 131. The controller 135 instructs the running controlling section 134 to run a management information region set by the management information region setting section 137, in this example, the volume management information section in FIG. 14.

The running controlling section 134 controls the running of the magnetic tape to cause the deck recording and reproduction section 133 to read the management information out from the volume management information section. The read-out volume management information is sent to the PC 132 via the interface 136 and an interface 139 and output to a CPU 140 and a memory 141. The CPU 140 displays the code of the data recording and reproduction apparatus 131 connected to the PC 132 and information on each volume recorded on the magnetic tape.

When the user selects a volume to be used, for example, the first volume in FIG. 14, the CPU 140 requests the controller 135 to move the reproduced region to the region of the first volume. Concurrently, the CPU causes the volume management information held in the memory 141 to be stored in the HDD 142. On receiving the request, the controller 135 uses the management information region setting section 137 to calculate the starting position of the first volume and instructs the running controlling section 134 to run the management information section of the first volume. The running controlling section 134 controls the running of the magnetic tape and causes the deck recording and reproduction section 133 to read the management information out from the first volume. The read-out management information is sent again to the PC 132 via the interfaces 136 and 139 and output to the CPU 140 and the memory 141.

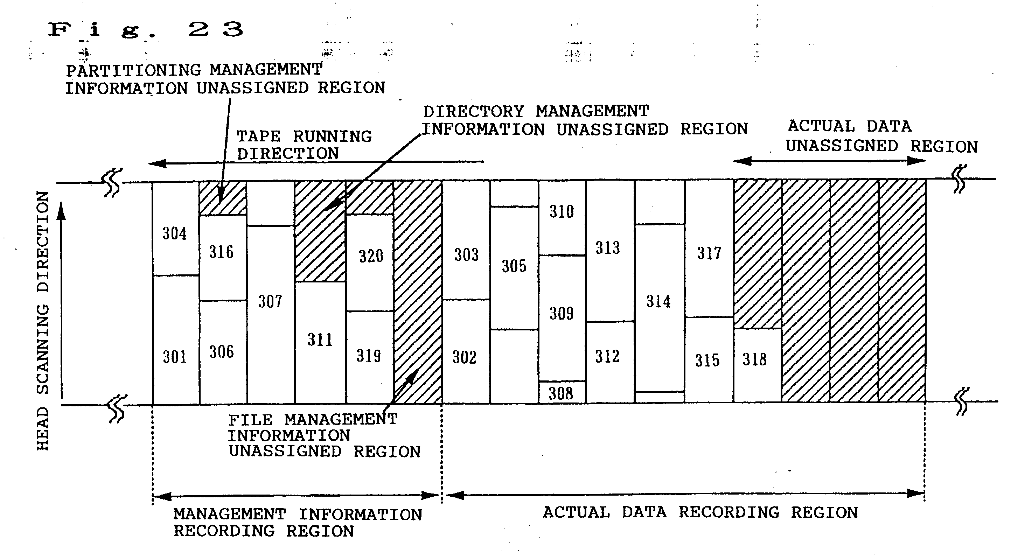

In data recorded from a disc, management information is often distributed in actual data. When recorded on a tape, such data is relocated and recorded using a data formatter 144 so that the management information is located in the recording leading or terminal region or the recordable terminal region of the magnetic tape. The data formatter 144 can be configured by changing readout addresses based on a buffer and the management information region setting section 137. FIG. 23 shows the details of the management information. In this figure, the management information is recorded in a similar order in either a recording leading or terminal region or the recordable terminal region of the magnetic tape, but only in the recordable terminal region of the magnetic tape, the information can be recorded in the direction from the recordable terminal to a recording leading region.

Alternatively, all the transmitted data may be considered as the actual data described above, with the management information newly generated separately from the actual data. The management information may be created based on the information recorded in the actual data or the management information recorded in the management data generator 145 may be directly used or the user of the data recording and reproduction apparatus 131 may input from the PC 132 information required to create management information each time the user uses the apparatus.

By setting a management information recording region on the magnetic tape, the need to search the overall tape during the processing of the individual files is eliminated to allow easy accesses. If the amount of information recorded in the recording region increases, only the management information on the magnetic tape can be collectively recorded in a storage device such as a memory at the time of the first reproduction to allow easier accesses during the subsequent file processing.

The management information includes unassignment information used in recording data in volumes to determine whether or not a particular region in the volume has already been used for recording. Although the unassignment information is included in the volume management information, one piece of unassignment information can be used to manage both management information and actual data.

The unassignment information is provided for the recording of partitioning information, directory information, file information, and actual data that is files, respectively. If new file data is externally provided and recorded in volume data already recorded in the magnetic tape, the new file data and the file management information on this data can be additionally recorded in the actual data region and the management information recording region, respectively, using the plurality of unassignment information described above.

All the management information or part of the management information including the unassignment information can also be recorded in a memory in a magnetic tape medium (hereafter referred to as a "cassette").

The CPU 140 causes the management information on the first volume held in the memory 141 to be stored in the HDD 142. The CPU 140 also allows the information on the directories and files existing in the first volume to be displayed on the PC 132. When the user selects a file to be used, the CPU 140 obtains information on the position of the file from the management information on the memory 141 or the HDD 142 and instructs the controller 135 to read out the file to be used.

On receiving the request, the controller 135 calculates the starting position of the file and instructs the running controlling section 134 to run the magnetic tape from the calculated position. The running controlling section 134 controls the running of the magnetic tape, and the deck recording and reproduction section 133 reads the requested file out from the first volume. The data in the read-out file is transmitted to the PC 132 and provided to the CPU 140 and the memory 141.

Next, an operation performed to add and record a file in, for example, the first volume is described.

In this case, based on the information on the directories and files existing in the first volume, the CPU 140 generates in a specified format, information such as a file name, a creation date and time, and a directory under which the file is created. Based on the information on the free regions of the magnetic tape, the CPU also creates information on a file write starting position on the magnetic tape. The created information is added to the management information on the memory 141 and the HDD 142, and the file to be added and recorded is transmitted to the data recording and reproduction apparatus 131. Based on the information on the write starting position on the magnetic tape, the controller 135 calculates the file starting position and instructs the running controlling section 134 to start recording and running from the calculated position. The deck recording and reproduction section 133 then writes to the tape the new file input via the interface 136.

Thus, once the file has been added and recorded, the data corresponding to the size of the file has been recorded on the magnetic tape from the calculated write starting position. Now, the management information is present in the HDD 142 and the memory 141 as information on the added and recorded file. The HDD 142 is assumed to have those directories or files which the user cannot normally view or rewrite easily and to which the management information is saved. The file name is determined to be unique depending on the recording date and time and the magnetic tape.

If the user finished the use of the magnetic tape and request the PC 132 to unload the tape cassette, the CPU 140 reads the management information out from the HDD 142 and sends it to the data recording and reproduction section 131 together with the request for the unloading of the tape cassette. On receiving this information, the data recording and reproduction apparatus 131 uses the management information region setting section 137 to calculate the starting position of the first volume and to instruct the running controlling section 134 to start recording and running the management information portion of the first volume data. The deck recording and reproduction section 133 then writes the input management information to the management information recording portion of the magnetic tape. Once the write has been finished, the tape cassette is unloaded. In addition, a setting is required such that the unloading of the tape cassette is not allowed only by the data recording and reproduction apparatus 131 until the management information is written back to the magnetic tape except for special emergency operations.

During a write-back, the tape check section 138 checks whether or not the information is prevented from being written back to the magnetic tape for any reason. In addition, the connection check section 143 checks whether or not the interface between the PC 132 and the data recording and reproduction apparatus 131 is disconnected. If the result of the check indicates that any condition prevents the information from being written to the magnetic tape, the file on the HDD 142 is saved under an identifiable name instead of being deleted. Of course, the file recorded on the HDD 142 may be left as it is even if the write-back is successful.

(Eighth Embodiment)

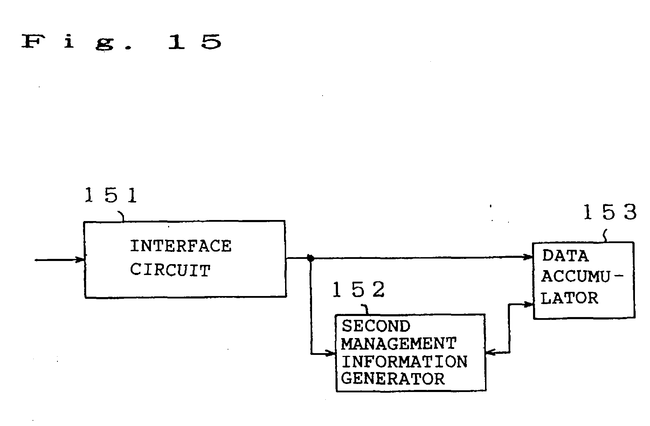

FIG. 15 is a block diagram of a data recording apparatus according to an eighth embodiment. As shown in this figure, the data recording apparatus comprises an interface circuit 151, a second management information generator 152, and a data accumulator 153.

The interface circuit 151 is connected to the second management information generator 152 and the data generator 153, inputs external image and sound signals in volumes or frames, and outputs them to the second management information generator 152 and the data accumulator 153. Hereafter, image signals are described in volumes. The second management information generator 152 is connected to the interface circuit 151 and the data accumulator 153 to generate or update second management information described below. The data accumulator 153 inputs data in volumes from the interface circuit 151 and the second management information from the second management information generator 152 and records them on a storage medium.

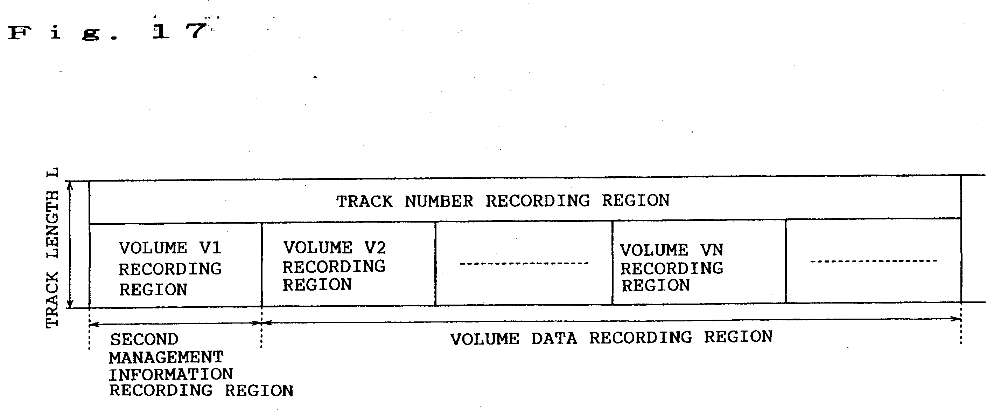

A tape-like recording medium, which is one of the storage media, has a track with a length L in the width direction of the tape and a large number of tracks in the longitudinal direction of the tape as shown in FIG. 17. To each track, the track number is added. The storage medium according to this embodiment includes a volume data recording regions in which the data from each volume is recorded and a second management information recording region in which the second management information used to collectively manage each volume is recorded.

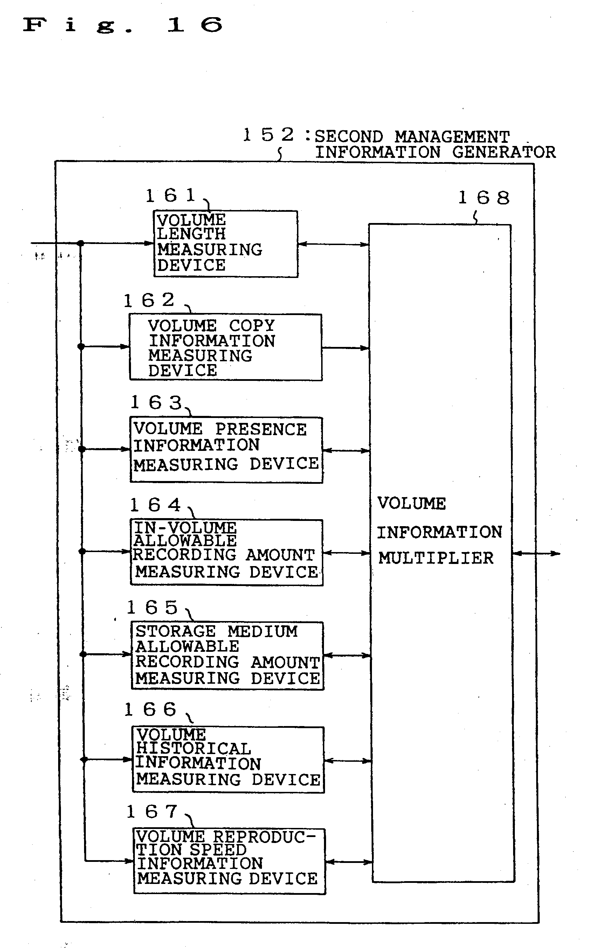

FIG. 16 is a block diagram showing the internal configuration of the second management information generator 152. The second management information generator 152 comprises a volume length measuring device 161, a volume copy information measuring device 162, a volume presence information measuring device 163, a in-volume allowable recording amount measuring device 164, a storage medium allowable recording amount measuring device 165, a volume historical information measuring device 166, a volume reproduction speed information measuring device 167, and a volume information multiplier 168 that multiplies information from these blocks.

When volume data is input, the volume length measuring device 161 outputs a volume length. When volume data is input, the volume copy information measuring device 162 outputs volume copy information. When volume data is input, the volume presence information measuring device 163 outputs volume presence information. When volume data is input, the in-volume allowable recording amount measuring device 164 outputs in-volume allowable recording count. When volume data is input, the storage medium allowable recording amount measuring device 165 outputs storage medium allowable recording amount. When volume data is input, the volume historical information measuring device 166 outputs volume historical information. When volume data is input, the volume reproduction speed measuring device 167 outputs volume reproduction speed information.

The volume information multiplier 168 inputs the volume length, the volume copy information, the volume presence information, the in-volume allowable recording amount, the storage medium allowable recording amount, the volume historical information, and the volume reproduction speed information, and multiplies these pieces of information to output them to the data accumulator 153.

The operation of the data recording apparatus according to the eighth embodiment configured as described above is described. In FIG. 15, an externally transferred input volume (volume data) is loaded in the data recording apparatus through the interface circuit 151. The loaded data is input to the second management information generator 152 to create data management information in volumes. Together with volume data, this second management information is recorded on a storage medium by the data accumulator 153.

The volume length measuring device 161 measures the volume length of a new volume input from the interface circuit 151 to calculate the number of tracks required to record it on the storage medium. The volume length measuring device 161 reads from the data accumulator 153 the second management information previously recorded on the storage medium, and obtains information on the individual volume starting track numbers of the already recorded volumes (hereafter referred to as "old volumes") and the relevant number of tracks. Using the information on the volume starting track numbers of the old volumes and the relevant number of tracks and the number of tracks required to record a new volume, the volume length measuring device 161 calculates the starting track position of the new volume on the storage media. The volume length measuring device 161 provides the starting track position of the new volume on the storage medium and the relevant number of tracks to the data accumulator 153 to record it in the second management information recording region in the storage medium.

The volume copy information measuring device 162 extracts the copy management information on the new volume. The extracted copy management information on the new volume is input to the data accumulator 153 and recorded in the second management information recording region in the storage medium. The copy management information indicates whether the new volume is of a read-only, a readable/writable, or an additionally recorded type.

The volume presence information measuring device 163 inputs the new volume to the data accumulator 153, and when the volume data is recorded on the storage medium, also records flag information thereon indicating that the new volume has been recorded. If the new volume is later deleted from the storage medium, this flag will be changed to one indicating the deletion. If the data in the volume v2 in FIG. 17 is to be updated, this flag prevents the target region from being overwritten unless the flag for this region indicates "deleted." If the flag for the region in which the original volume v2 has been recorded indicates "deleted," this region is overwritten with the data from the new volume v2.

The in-volume allowable recording amount measuring device 164 calculates the in-volume allowable recording amount in the new volume. The result of the calculation is recorded in the second management information recording region. This is carried out to indicate whether or not the volume data can be additionally recorded in the region assigned for the recording of the new volume when the data has been input in files by the interface circuit 151.

The storage medium allowable recording amount measuring device 165 calculates the number of tracks required to record the new volume (hereafter referred to as a "first number of tracks") and detects the number of those tracks within the volume recording regions of the storage medium on which data can be additionally recorded (hereafter referred to as a "second number of tracks"). If the first number of tracks is larger than the second number of tracks, the new volume is prohibited from being recorded in the data accumulator 153.

The volume historical information measuring device 166 extracts information such as the name and recording date and time of the new volume that should be originally recorded as the first management information, and records it in the data accumulator 153 as part of the second management information.

After recording the new volume on the storage medium, the volume reproduction speed information measuring device 167 creates information on the reproduction speed provided if a reproduction apparatus is used and reproduces the new volume. The volume reproduction speed information measuring device inputs and outputs data to and from the data accumulator 153.

Information output from the volume length measuring device 161, the volume copy information measuring device 162, the volume presence information measuring device 163, the in-volume allowable recording amount measuring device 164, the storage medium allowable recording amount measuring device 165, the volume historical information measuring device 166, and the volume reproduction speed information measuring device 167 is output to the volume information multiplier 168 for multiplication. The multiplied information is recorded in the second management information recording region in the storage medium.

The management information conventionally recorded at the beginning of each volume is collectively recorded in the leading position of the storage medium or another particular position as the second management information. By first accessing the second management information recording region, an outline of each volume can be obtained without searching the storage medium up to a region in which each volume is actually recorded. If the storage medium is a recording medium such as a magnetic tape and the relevant volume is recorded at the terminal of the tape, the volume position can be determined easily without running the magnetic tape up to that volume position, by simply reading the information recorded in the second management information recording region.

Likewise, the volume copy information, volume presence information, in-volume allowable recording amount information, storage medium allowable recording amount information, volume historical information, and volume reproduction speed information on each volume can be obtained without accessing regions in which individual volumes are recorded, by simply reading the second management information. In this manner, each volume can be retrieved easily by collectively recording data storage information on each volume in a specified position on the storage medium.

(Ninth Embodiment)

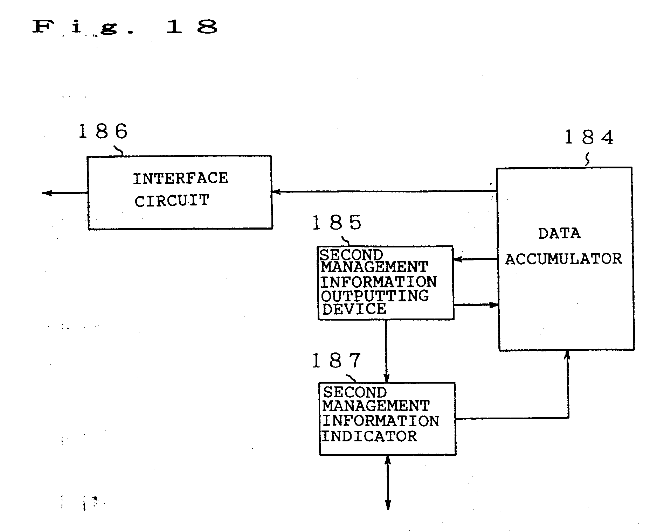

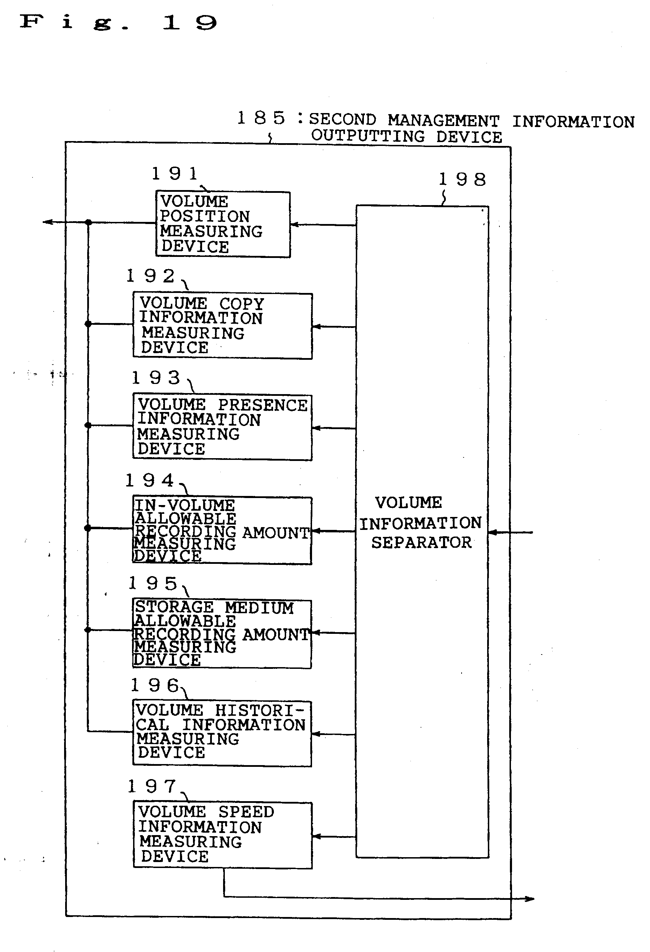

Next, a data reproduction apparatus according to a ninth embodiment of this invention is explained with reference to FIGS. 18 and 19.

FIG. 18 is a block diagram of the data reproduction apparatus according to the ninth embodiment. As shown in this figure, the data reproduction apparatus comprises a data accumulator 184, a second management information outputting device 185, an interface circuit 186, and a second management information indicator 187. The same components as in the eighth embodiment has the same names and their detailed description is omitted.

The data accumulator 184 is connected to the interface circuit 186, the second management information outputting device 185, and the second management information indicator 187, and outputs volume data to the interface circuit 186. The data accumulator 184 outputs the second management information to the second management information outputting device 185 and inputs externally input user information via the second management information indicator 187. The data accumulator 184 inputs reproduction speed information output from the second management information outputting device 185.

The second management information outputting device 185 extracts from the data accumulator 184 the second management information recorded in the second management information recording region, and provides this information to the second management information indicator 187. The interface circuit 186 externally outputs volume data read out from the data accumulator 184.

The second management information indicator 187 inputs the second management information from the second management information outputting device 185, outputs user information to the data accumulator 184, and externally inputs and outputs user information. The second management information indicator 187 indicates the second management information to the user of the data reproduction apparatus. Based on the displayed second management information, a volume to be reproduced is selected. Once the information on the selected volume has been sent to the data accumulator 184, the data in the selected volume is read out from the data accumulator 184 and externally output through the interface circuit 186.

FIG. 19 is a block diagram showing the internal configuration of the second management information outputting device 185. In this figure, the second management information outputting device 185 includes a volume position measuring device 191, a volume copy information measuring device 192, a volume presence information measuring device 193, an in-volume allowable recording amount measuring device 194, a storage medium allowable recording amount measuring device 195, a volume historical information measuring device 196, and a volume speed information measuring device 197, as in the eighth embodiment. The second management information outputting device 185 further includes a volume information separator 198 that reads the second management information from the storage medium and outputs specified information to these blocks.

The volume position measuring device 191 extracts a volume position from output data from the volume information separator 198. The volume copy information measuring device 192 extracts volume copy information from output data from the volume information separator 198. The volume presence information measuring device 193 extracts volume presence information from output data from the volume information separator 198. The in-volume allowable recording amount measuring device 194 extracts an in-volume allowable recording amount from output data from the volume information separator 198. The storage medium allowable recording amount measuring device 195 extracts a storage medium allowable recording amount from output data from the volume information separator 198. The volume historical information measuring device 196 extracts volume historical information from output data from the volume information separator 198. These data are output to the second management information indicator 187 of FIG. 18.

The volume speed information measuring device 197 is connected to the volume information separator 198 and the data accumulator 184 to extract and generate volume speed information.

The volume information separator 198 reads out the second management information recorded in the second management information recording region and outputs the volume position information, the volume copy information, the volume presence information, the in-volume allowable recording amount information, the storage medium allowable recording amount information, and the volume historical information.

The operation of the data reproduction apparatus according to the ninth embodiment configured as described above is described below. The second management information recorded in the leading part or another particular position in the storage medium is read out from the data accumulator 184 and input to the volume information separator 198. The volume information separator 198 separates each information, and provides it to the volume position measuring device 191, the volume copy information measuring device 192, the volume presence information measuring device 193, the in-volume allowable recording amount measuring device 194, a storage medium allowable recording amount measuring device 195, and the volume historical information measuring device 196.

The volume position measuring device 191 detects the first track number of each volume within the storage medium which is recorded in the second management information recording region. The volume copy information measuring device 192 detects the copy information indicating whether each volume recorded in the second management information recording region is of a read-only or a readable/writable type. The volume presence information measuring device 193 detects a flag indicating whether each volume recorded in the second management information recording region is considered to actually exist or to have been deleted. If any volume is considered to have been deleted, the second management information indicator 187 indicates disable information to the user.

The in-volume allowable recording amount measuring device 194 detects the in-volume allowable recording amount of each volume recorded in the second management information recording region, and also detects whether or not each volume has a region in which data can be recorded in files. The storage medium allowable recording amount measuring device 195 detects the amount of volume recordable regions in the storage medium recorded in the second management information recording region. The volume historical information measuring device 196 detects information on each volume such as a volume name and a final access date and time which is recorded in the second management information recording region.

The volume speed information measuring device 197 detects the reproduction speed information on the reproduced volume from the second management information recording region and transfers the detected information to the data accumulator 184. The data accumulator 184 reproduces the volume data at a reproduction speed based on the reproduction speed information, and transfers it to the interface circuit 186.

By first accessing the second management information recording region, an outline of each volume can be obtained without searching the storage medium up to a region in which each volume is actually recorded. If the storage medium is a tape like recording medium such as a magnetic tape and the relevant volume is recorded at the terminal of the tape, the volume position can be determined easily without running the magnetic tape up to that volume position, by simply reading the information recorded in the second management information.

Likewise, the volume copy information, volume presence information, in-volume allowable recording amount information, storage medium allowable recording amount information, volume historical information, and volume reproduction speed information on each volume can be obtained without accessing regions in which individual volumes are recorded, by simply reading the second management information. As a result, each volume can be retrieved and output easily.

(Tenth Embodiment)

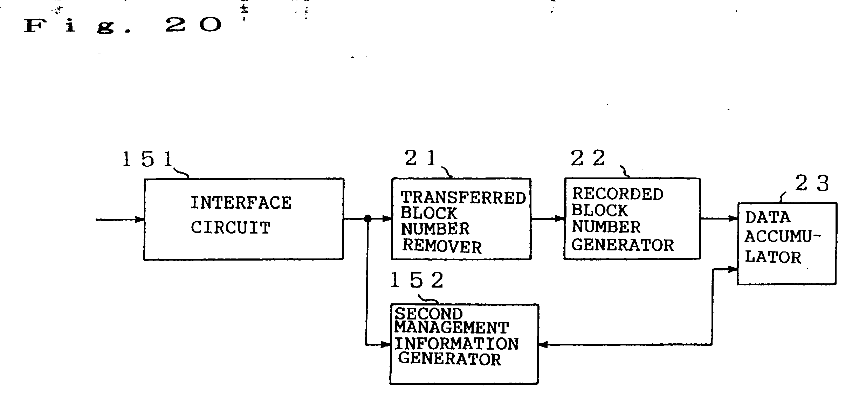

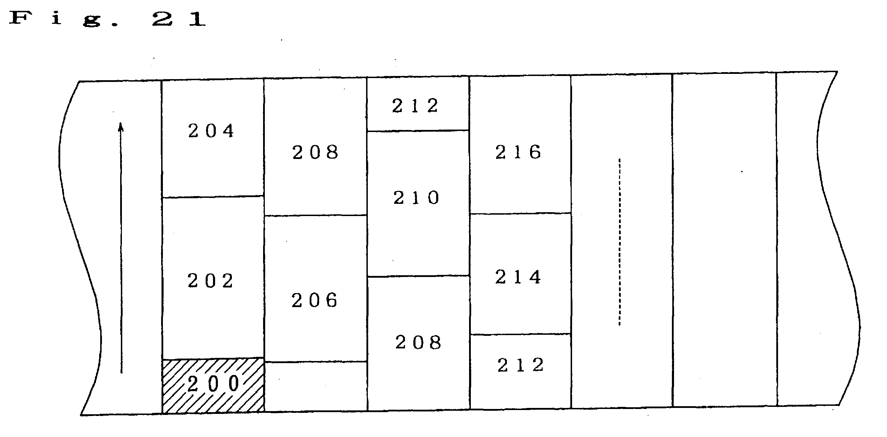

A data recording apparatus according to a tenth embodiment of this invention is described with reference to FIGS. 20 and 21.

FIG. 20 is a block diagram of a data recording apparatus according to a tenth embodiment. As shown in this figure, the data recording apparatus comprises an interface circuit 151, a second management information generator 152, a transferred block number remover 21, a recording block number generator 22, and a data accumulator 23. The same components as in the eighth embodiment have the same names and their detailed description is omitted.

When volume data including image and sound signal is input to the transferred block number remover 21 through the interface circuit 151, the remover 21 removes the transferred block numbers from this volume and provides it to the recording block number generator 22. When the volume data with the transferred block deleted is provided to the recording block number generator 22 by the transferred block number remover 21, the generator 22 generates recording block numbers to change the block numbers. The data accumulator 23 records the block numbers generated by the recording block number generator 22 and also records on the storage medium the second management information generated by the second management information generator 152.

The operation of the data recording apparatus according to the tenth embodiment configured as described above is explained below. Externally transferred data in volumes is loaded in the data recording apparatus through the interface circuit 151. The loaded volume data is input to the second management information generator 152 to generate second management information in volumes. In addition, each block loaded through the interface circuit 151 and constituting the volume data (hereafter referred to as a "transferred block") has a block number (hereafter referred to as a "transferred block number") added thereto.

When each volume is input to the transferred block number remover 21, the remover 21 removes the recording region for the block number from $(x)$ ($(x)$ is an integer) continuous blocks excluding the first block. The $(x)$ blocks with their block numbers removed are sent to the recording block number generator 22 as a single group of blocks. The $(x)$ blocks with their block numbers removed are called a group of transferred blocks.

The recording block number generator 22 assigns a recording block number to the first block of the group of transferred blocks. In this manner, the groups of transferred blocks and recording blocks numbers are transferred to the data accumulator 23. The second management information generated by the second management information generator 152 is also transmitted to the data accumulator 23.

The storage medium in the data accumulator 23 is divided into a volume data and a second management information recording regions as shown in FIG. 17. A group of blocks constituting a volume are assumed to be recorded in $(y)$ tracks within the volume region. In this case, a recording block number is recorded in the leading position of the track subsequent to every $(y)$ tracks. FIG. 21 shows a layout of signals in which the number of tracks is four ($y = 4$) and in which the number of blocks is 8 ($x = 8$). The recording block number is recorded in a region 200. Volume data is recorded in regions 202, 204, 206, 208, ...

According to this embodiment, redundant recording areas can be reduced in recording volumes on the storage medium. If the amount of recording required to record a single transferred block number is assumed to be, for example, (k), then the amount of recording $(x - 1) \times k$ can be reduced in recording a single group of transferred blocks. In addition, if the storage medium is a tape-like recording medium, retrieval or rewriting during recording or reproduction is executed for every plural, for example, (y) tracks. Thus, it is substantially effective to add a recording block number for every plural tracks.

(Eleventh Embodiment)

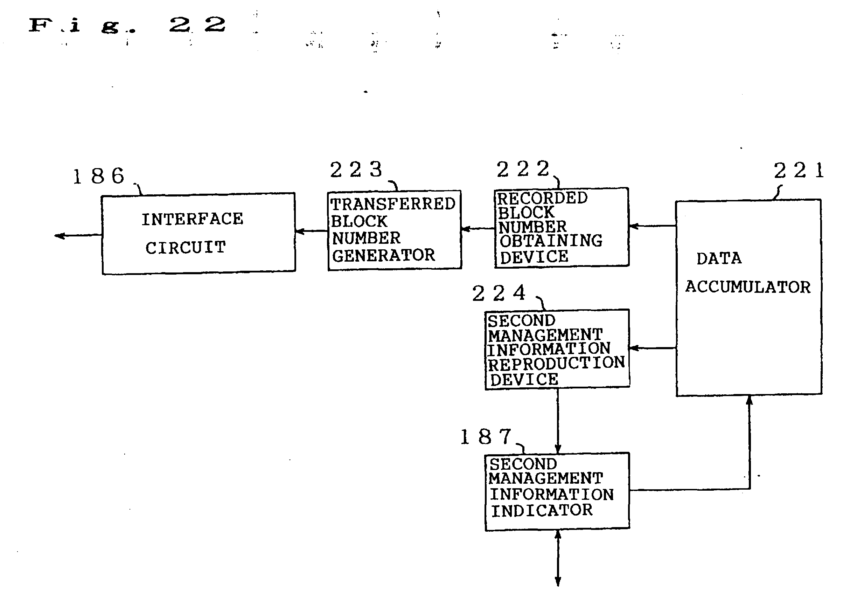

A data reproduction apparatus according to an eleventh embodiment is described with reference to FIG. 22. FIG. 22 is a block diagram of the data reproduction apparatus according to the eleventh embodiment. As shown in this figure, in addition to the interface circuit 186 and the second management information indicator 187 in the ninth embodiment, the data reproduction apparatus includes a data accumulator 221, a recording block number obtaining device 222, a transferred block number generator 223, and a second management information reproducing device 224.

When the storage medium is reproduced, the data accumulator 221 outputs reproduced volumes to the recording block number obtaining device 222, outputs the second management information to the second management information reproduction device 224, and inputs user information from the second management information indicator 187. On receiving the volume data from the data accumulator 221, the recording block number obtaining device 222 outputs the transferred block numbers to the transferred block number generator 223.

On receiving the transferred block numbers and the volume data from the recording block number obtaining device 222, the transferred block number generator 223 outputs reproduced volumes to the interface circuit 186. The second management information reproduction device 224 extracts the second management information recorded on the storage medium in the data accumulator 221. The subsequent operations of the second management information reproduction device 224 and the second management information indicator 187 are the same as in the ninth embodiment.

In the volume data recorded on the storage medium, a plurality of recording blocks recorded over (y) tracks are obtained at a time and sent to the recording block number obtaining device 222. The recording block number obtaining device 222 separates the plurality of recording blocks recorded over (y) tracks into a group of transferred blocks and recording block numbers. The device 222 provides the group of transferred blocks to a transferred block generator (not shown) and also provides the recording block numbers to the transferred block number generator 223. The transferred block number generator 223 generates (x) transferred block numbers from the recording block numbers and outputs them through the interface circuit 186.

According to this embodiment, by recording only the block number of the first block as in FIG. 21 instead of recording a block number for each recorded block, the numbers of the other blocks can be recovered during reproduction. This can reduce the amount of recording in recording volume data on the storage medium. In addition, if the storage medium is a tape-like recording medium, retrieval and rewriting for recording or reproduction may be executed for every plural tracks. Thus, the reproduction of the volume data is not affected if a recording block number is added for every plural tracks.

(Twelfth Embodiment)

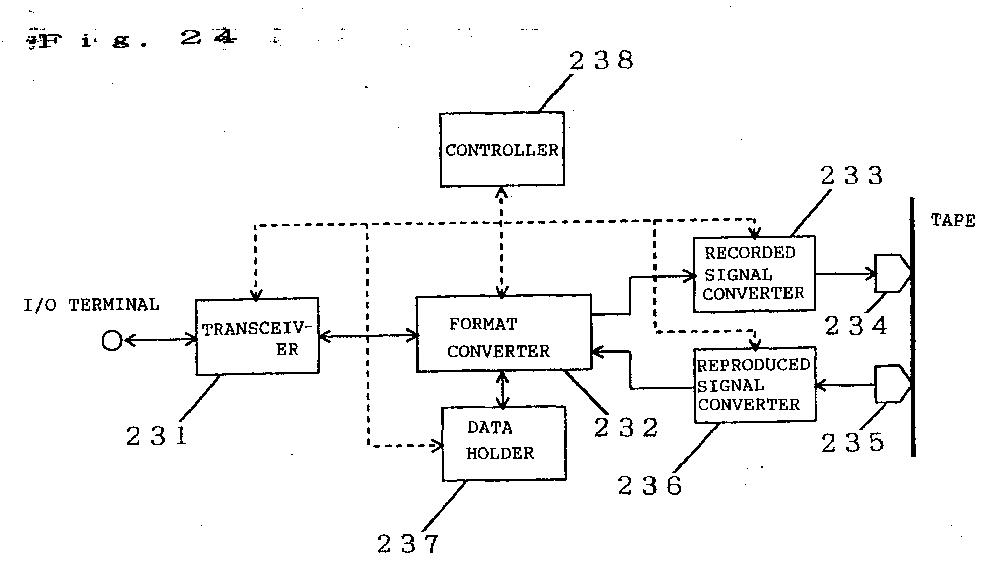

FIG. 24 is a block diagram showing a data recording apparatus according to a twelfth embodiment of this invention. Reference numeral 231 designates a transceiver; 232 is a format converter; 233 is a recorded signal converter; 234 is a recording head; 235 is a reproduction head; 236 is a reproduced signal converter; 237 is a data holder; and 238 is a controlling device.

In the data recording apparatus of this configuration, the transceiver 231 transmits data to and from external equipment by receiving commands from the external equipment and returning statuses to it. The controlling device 238 controls the overall apparatus based on these commands.

The format converter 232 converts data input subsequently to a command instructing the data to be recorded into a specified format by adding specified management information to it. The management information is similar to that in conventional data recording apparatuses.

The recorded signal converter 233 converts the format-converted data into recording signals by error-correction-encoding the data, adding synchronizing pattern addresses to it as recording blocks, and modulating it. The converter 233 then records the recording signals on the tape that is a recording medium, using the recording head 234.

The reproduction head 235 obtains reproduced signals from the recording medium. The reproduced signal converter 236 demodulates the reproduced signals, and separates them into recording blocks based on the synchronizing pattern addresses in order to identify the recording blocks, thereby carrying out error correction decoding.

The format converter 232 checks the error-correction-decoded data to determine whether or not the data has been recorded correctly, and in response to the result of the determination, the data holder 237 holds data determined to be recorded incorrectly. To check the data, all the reproduced and recorded data may be compared together or only check sums may be compared together or the amount of errors may be included in the determination criteria.

Once a recording command has been received, the data continues to be recorded until all the data indicated in the command has been recorded. Then, those data held by the data holder 237 which are determined to have been recorded incorrectly are re-recorded. At this point, information identifying the recorded data and the parts of the tape in which data is recorded is simultaneously recorded. Recording, reproduction, check, and re-recording are repeated as described above until all the data are determined to have been recorded correctly, and then the recording of the data is finished.

As described above, according to this embodiment, re-recorded data can be limited to those which have not previously been recorded correctly, so the recording medium is not used wastefully in recording data.

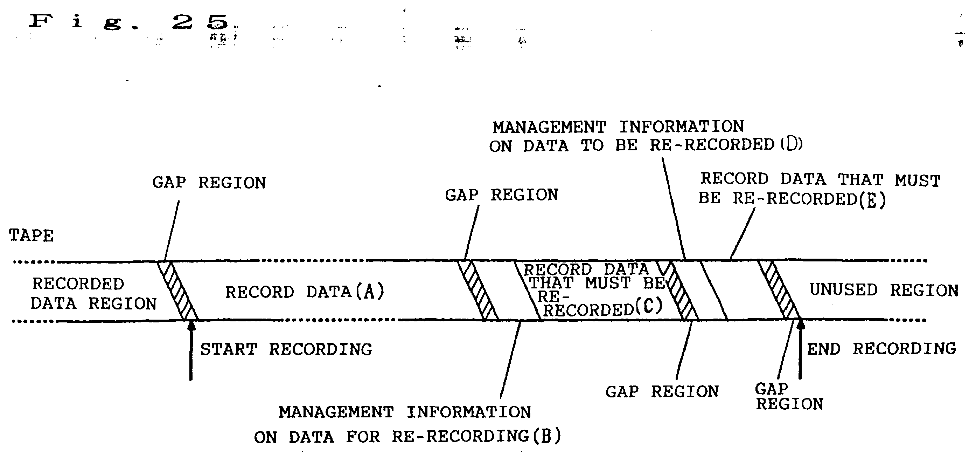

FIG. 25 shows an example showing how data is actually recorded on a tape if the above procedure is used. Each region is continuously recorded while executing recording, reproduction, and check. The tape comprises a recorded data region, a gap region, a data recording region (A), a gap region, a re-recording data management information region (B), a region in which data that must be re-recorded is recorded (C), a gap region, a management information region in which data to be re-recorded again is recorded (D), a region in which data that must be re-recorded again is recorded (E), a gap region, and an unused region, from left to right. The gap regions are provided to guarantee tracking during append recording if the track pitch cannot be maintained relative to already recorded tracks, and need not necessarily be recorded depending on the accuracy of the mechanism of the apparatus.

According to this embodiment, data is held in the data holder, 273. The amount of required memory, however, is expected to increase if all the data is hold, and similar effect, can be obtained by holding information that can identify data (for example, group or frame numbers, or blocks that are data the unit of inputs to and outputs from external equipment).

(Thirteenth Embodiment)

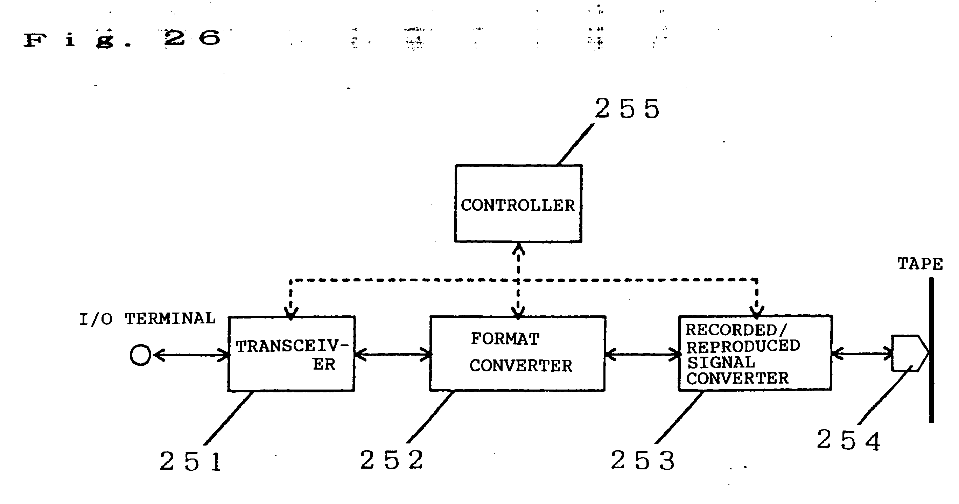

FIG. 26 is a block diagram of a data recording apparatus according to a thirteenth embodiment according to this invention. Reference numeral 251 is a transceiver; 252 is a format converter; 253 is a recorded/reproduced signal converter; 254 is a head; 255 is a controlling device.

In the data recording apparatus of this configuration, the transceiver 251 transmits data to and from external equipment by receiving commands from the equipment and returning statuses to it. The controlling device 255 controls the overall apparatus based on these commands.

The format converter 252 converts data input subsequently to a command instructing the data to be recorded into a specified format by adding specified management information to it. The management information is similar to that in conventional data recording apparatuses.

The recorded/reproduced signal converter 253 converts the format-converted data into recording signals by error-correction-encoding the data, adding synchronizing pattern addresses to it as recording blocks, and modulating it. The converter 253 then records recording signals on the tape that is a recording medium, using the head 254. Once a recording command has been received, the data continues to be recorded until all the data indicated in the command has been recorded. Then, the data is reproduced to check whether or not it has been recorded correctly.

The head 254 obtains reproduced signals from the tape. The recorded/reproduced signal converter 253 demodulates the reproduced signals, and separates them into recording blocks based on the synchronizing pattern addresses in order to identify the recording blocks, thereby carrying out error correction decoding. The format converter 252 checks the error-correction-decoded data to determine whether or not the data has been recorded correctly. To check the data, all the reproduced and recorded data may be compared together, or only check sums may be compared together, or the amount of errors may be included in the determination criteria. Those data which are determined as a result of the check to have been recorded incorrectly are re-recorded. At this point, information identifying the recorded data and the parts of the tape in which data is recorded must be simultaneously recorded.

Recording, reproduction, check, and re-recording are repeated as described above until all the data are determined to have been recorded correctly, and then the recording of the data is finished.

As described above, according to this embodiment, re-recorded data can be limited to those which have not previously been recorded correctly, so the recording medium is not used wastefully in recording data.

FIG. 25 shows an example showing how data is actually recorded on a tape if the above procedure is used. This embodiment allows the same tape pattern as in the data recording apparatus according to the twelfth embodiment to be obtained. Actually, each region is continuously recorded by recording the region (A), rewinding the tape, then checking the recorded data while reproducing the region (A), subsequently recording the regions (B) and (C), rewinding the tape, and then checking the recorded data while reproducing the regions (B) and (C). The gap regions are similar to those in the twelfth embodiment.

Despite the need for a larger amount of time to completely finish recording all the data compared to the twelfth embodiment, this embodiment does not require a data holder, can use a single circuit for both recording and reproduction because it does not require them to be executed simultaneously, and enables this invention to be applied to any head cylinder configuration. The twelfth embodiment also enables this invention to be applied to any head cylinder configuration if it allows both recording and reproduction to be executed concurrently.

Although this embodiment re-records those data which are determined to have been recorded incorrectly by holding information identifying these data (the information may be, for example, group or frame numbers or block numbers based on blocks that are the unit for input and output from and to external equipment), re-recording can be carried out each time data considered to have been recorded incorrectly is detected.

The block configuration shown in the twelfth and the thirteenth embodiments is only an example, and a similar method can be used to record data using a different configuration. The criteria for determining whether or not data has been recorded correctly depends on the data recording apparatus. The management information on re-recorded data is arbitrary as long as it can identify the recorded data and the recording method.

Although this invention has been described in conjunction with the data recording apparatus, it is also applicable to the recording section of a data recording and reproduction apparatus.

The external equipment is mostly computers. To allow the data recording apparatus to perform the above operations, however, the system must be controlled in such a way that overwriting data waits in a different region and regular overwriting is carried out after a backup operation has been finished because if data is overwritten on the computer after a data backup operation has been started, the changed data will be used during comparison even if the data has been recorded correctly.

(Fourteenth Embodiment)

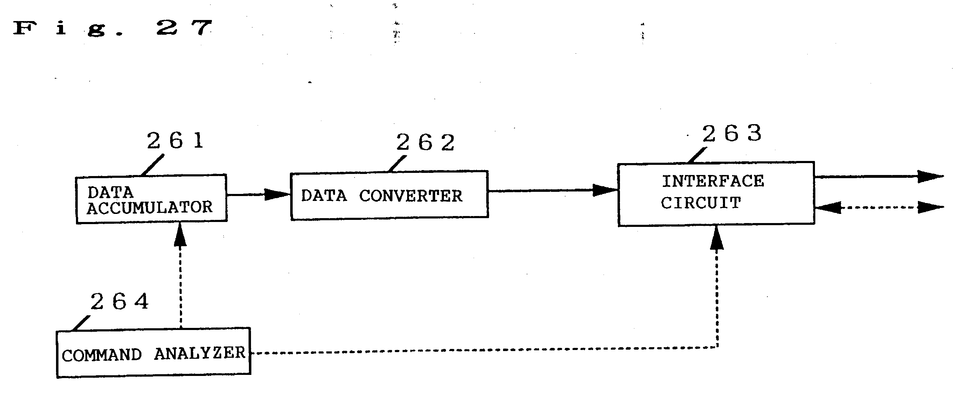

FIG. 27 is a block diagram of a fourteenth embodiment of this invention. In this figure, 261 is a data accumulator; 262 is a data converter; 263 is an interface circuit; and 264 is a command analyzer. The data accumulator 261 has a built-in data storage medium (not shown) and reads data out from the data storage medium in response to a command. The data accumulator 261 includes the data storage medium and data read-out means according to this invention.

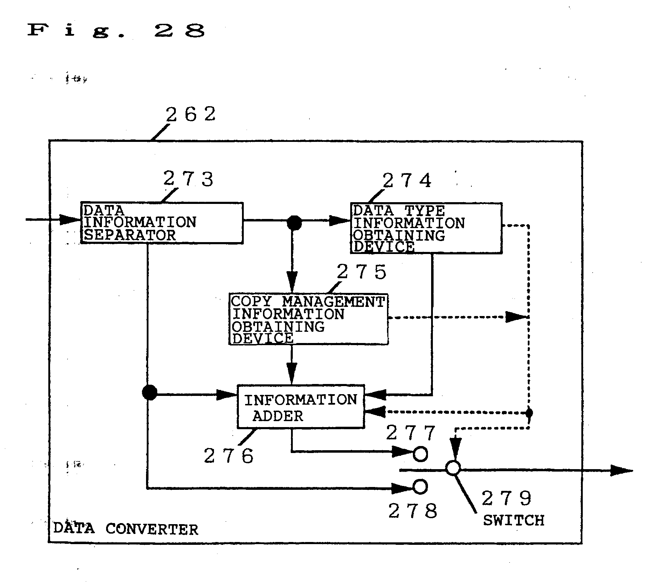

FIG. 28 shows the internal configuration of the data converter 262. In this figure, 273 is a data information separator acting as a separating section of this invention; 274 is a data type information obtaining device acting as a determination means of this invention; 275 is a copy management information obtaining device; 276 is an information adder; 277 and 278 are switch terminals; and 279 is a switch. Those components which have the same reference numerals are assumed to have the same configurations and functions. An output controlling means of this invention is a means including the switch 279.

The operation of the data read-out apparatus of this configuration is described below.

The data in the data accumulator 261 is sent to the data information separator 273 in the data converter 262 every sector with a data length (n).

The command analyser 264 specifies sectors to be read out and sends specified sector numbers to the data accumulator 261 as a command. The command analyzer 264 not only sends a command to the data accumulator 261 but also receives a command through the interface circuit 263. Alternatively, it externally transfers a command through the interface circuit 263.

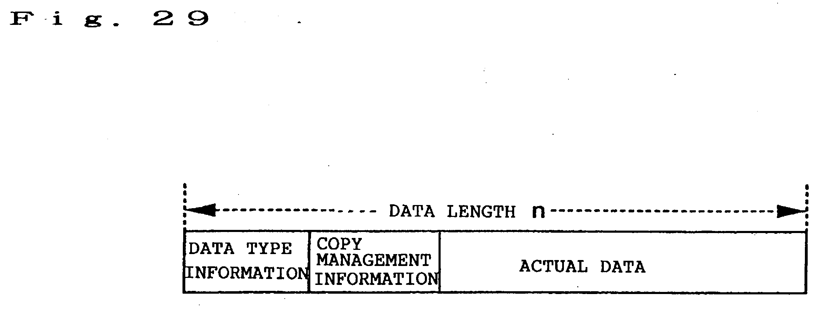

FIG. 29 shows a sector with a data length (n). The sector with a data length (n) in FIG. 29 has actual data, data type information, and copy management information recorded in predetermined positions. The data type information and the copy management information are collectively called "information data."

The data in each sector with a data length (n) sent to the data information separator 273 is separated into actual and information data. The actual data is transferred to the information adder 276 and the terminal 278. The information data is transferred to the data type information obtaining device 274 and the copy management information obtaining device 275.

The, data type information obtaining device 274 obtains data type information from the information data to determine the data type of the actual data. After determining the data type of the actual data, the data type information obtaining device 274 transfers data type information to the information adder 276. The data type includes "image and sound data" and "data other than images and sounds." In addition, based on the data type information obtained, the data type information obtaining device 274 transmits a control signal to the switch 279.

The copy management information obtaining device 275 obtains copy management information from the information data to determine the copy management information of the actual data. After determining the copy management information, the copy management information obtaining device 275 transfers copy management information to the information adder 276. The copy management information includes "copy allowed," "only one copy allowed," and "copy prohibited."

The information adder 276 adds the data type and the copy management information to the actual data and then transfers it to the terminal 277.

The switch 279 switches between the data sent to the terminal 277 and the data sent to the terminal 278 to select data for external output. If the data type information obtained by the data type information obtaining device 274 is "image and sound data," the switch 279 is connected to the terminal 277, while if the data type information is "data other than images and sounds," the switch 279 is connected to the terminal 278. The data is then output through the interface circuit 263.

If the actual data is "image and sound data," this embodiment adds the information data to the actual date for outputting. As a result, external equipment connected to the data read-out apparatus can recognize the copy management information of the actual data to prevent the actual data from being used unfairly.

In addition, if the actual data is "data other than images and sounds," outputting only the actual data enabled external equipment capable of receiving only actual data to be connected to the data read-out apparatus. That is, even if a plurality of types of data are recorded in the data accumulator 261, the data can be output depending on the data type. This function can also extend the range of connectable external equipment.

**Claims**

1. A data recording apparatus for recording data on a magnetic tape comprising an input data identifier for identifying input data and outputting an input data identification signal, a recording pattern generator for selecting a recording pattern of said input data depending on said input data identification signal, and a recorder for recording said input data on said magnetic tape according to the recording pattern generated by said recording pattern generator.

2. A data recording apparatus according to Claim 1 wherein said recording pattern is such that a track on the magnetic tape is divided into a tracking information recording region and a main recording region and wherein the main recording region is divided into one or more regions.

3. A data recording apparatus according to Claim 2 wherein said recording pattern comprises said main recording region divided into an image and a sound regions and a buffer region therebetween.

4. A data recording apparatus according to Claim 2 wherein said recording pattern comprises said main recording region, and data and error correction codes assigned to the region so as to be mixed therein.

5. A data recording apparatus according to Claim 2 wherein said recording pattern comprises said main recording region, and data and error correction codes assigned to the region as a different region.

6. A data recording apparatus wherein when the input data with a length N in a single packet is recorded in a recording block with a length M and if the length N of the packet is divided by the length M but it cannot be divided without a remainder, dummy data is added to the insufficient region of said recording block and the data in the next input packet is recorded subsequently to the dummy data.

7. A data recording apparatus comprising:

   a block conversion means for converting input data with a length N from a single packet into L blocks with a length M shorter than the length N, and
   a recording means for executing predetermined signal processing on data in blocks obtained from said block conversion means to record the processed signals on the recording medium.

8. Data recording apparatus according to Claim 7 wherein in said block conversion means when the length of a single packet is assumed to be N and the length of a single block is assumed to be M shorter than said N, the number of blocks L into which a single packet is converted is the integral part of a value obtained by dividing said N by said M and counting the quotient as a whole number.

9. Data recording apparatus according to Claim 7 wherein in the recording means when K blocks can be located on a single track, the number of packets stored on a single track is the integral part of a value obtained by dividing said K by the number of blocks L into which a single packet is converted.

10. Data recording apparatus according to Claim 7 wherein in the recording means when K2 blocks can be located on H tracks constituting a single frame, the number of packets stored on H tracks is the integral part of a value obtained by dividing said K2 by the number of blocks L into which a single packet is converted.

11. A data recording apparatus comprising a dummy data generator for generating dummy data; and a recorder for converting data input in packets with a specified packet size M into blocks with a specified size N, storing said input data blocks converted into blocks with said specified block size N, in storage areas each comprising K2 blocks, and if, during the storage, the number of blocks obtained by converting said specified data size of input data is K3 (<K2), allowing said dummy data generator to generate dummy data corresponding to (K2 - K3) blocks to store it in the free area of said storage area.

12. A data recording apparatus comprising a dummy data generator for generating dummy data; and a recorder for inserting dummy data generated by said dummy data generator among said input data so that the input rate at which data is input in a specified data size unit will be equal to the recording rate at which the data is recorded on a recording medium if the former is lower than the latter.

13. A data recording apparatus according to claim 12 wherein said recorder adds to each block a flag indicating that said input data is valid while said dummy data is invalid.

14. A data recording apparatus according to Claim 11 comprising a block management information generator for generating block management information having identification information indicating whether each block in a storage area is said input data or dummy data, wherein said recorder records said block management information in a specified position of said recording medium.

15. Data recording apparatus for recording and reproducing input data on and from a recording medium in blocks with block numbers,

    a transferred block number remover for removing from (x) continuous blocks, the block number recording regions of the blocks other than the first block when data is input, and a data storage means for treating the x blocks output by said transferred block number remover as a group of blocks and recording said groups of blocks in such a way that they can be distinguished from one another.

16. Data reproduction apparatus operative when data is input in blocks with block numbers, for removing from (x) continuous blocks, the block number recording regions of the blocks other than the first block, treating said x blocks as a group of blocks, and reproducing said input data from a recording medium on which said groups of blocks are recorded so as to be distinguished from one another comprising:

    a recorded groups of blocks obtaining device for identifying and extracting a group of blocks recorded on said recording medium; and a transferred block number generator for adding a block number to a plurality of blocks extracted by said recorded groups of blocks obtaining device and constituting each block group, based on the block number of the first block.

17. A data recording method in a digital data recording system comprising a data recording apparatus for recording data on a recording medium and a controlling apparatus for transmitting and receiving data to and from said data recording apparatus and controlling the operation thereof, comprising the steps of:

    when said data recording apparatus is in use, transferring and storing management information of the data recorded on said recording medium in the storage section of said controlling apparatus
    when additionally recording or changing data on said recording medium, modifying the management information of the data to be additionally recorded or changed, on the storage section of said controlling apparatus;
    when the use of said data recording apparatus is finished, transferring to the data recording apparatus the latest management information held in the storage section of said controlling apparatus and rewriting said management information on said recording medium.

18. A data recording method according to Claim 17 wherein the storage section of said controlling apparatus has a higher access and a higher read-out speeds than the recording medium in said data recording apparatus and is a non-volatile storage medium.

19. A data recording method according to Claim 17 wherein when said recording medium is loaded in said data recording apparatus, said management information recorded on said recording medium is loaded in the storage section of said controlling apparatus, and wherein:

    when said recording medium is removed from said data recording apparatus, said management information held in the storage section of said controlling apparatus is written back to said recording medium.

20. A data recording method according to Claim 17 wherein when recorded in the storage section of said controlling apparatus, said management information remains saved thereto after the use of said data recording apparatus has been finished.

21. A data recording method according to Claim 17 wherein when said management information is written back to the recording medium in said data recording apparatus from the storage section of said controlling apparatus,

    if it is confirmed that it is impossible to write the information back correctly, the information is recorded in a particular recovery region of said storage section or stored as a recovery file to provide for the reuse of said data recording apparatus.

22. A data recording method according to Claim 17 wherein all the management information on data to be recorded is recorded in a specified position of said recording medium in a specified format and said data is recorded.

23. A data recording method according to Claim 17 or 22 wherein if said recording medium includes a plurality of volumes that are hierarchies used to manage a group of data,

said management information includes first management information used to manage a group of data in each volume and second management information used to manage an outline and the recording position of each volume.

24. A data recording method according to Claim 22 wherein said management information is recorded in the leading position of a tape medium.

25. A data recording method according to Claim 22 wherein said management information is recorded at the recorded terminal of a tape medium or each volume which is the terminal of the recorded position in which actual data is recorded.

26. A data recording method according to Claim 22 wherein said management information is recorded at the recordable terminal of a tape medium or each volume which is the terminal of the position in which actual data can be recorded.

27. A data recording method according to Claim 22 wherein said management information includes region information indicating whether or not a specified region in a tape medium is the region in which said management information is recorded.

28. A data recording method according to Claim 23 wherein said management information includes information on a reproduction speed at which each data is reproduced from said recording medium.

29. A data recording method according to Claim 23 wherein said second management information includes allowable recording amount information required to additionally add data to a volume.

30. A data recording method according to Claim 23 wherein said second management information includes information on the volume name and recording date and time of each volume.

31. A data recording method according to Claim 23 wherein said management information includes an allowable recording amount used in adding data to a volume, and wherein:

during reproduction, the allowable recording amount used in adding data to a volume in said second management information is extracted to allow additional recording if the size of said data to be added is within said allowable recording amount.

32. Tape media on which data is recorded using a method according to any of Claims 23 to 31.

33. A data reproduction method wherein when data recorded on a recording medium using said data recording method according to Claim 23 is reproduced, the information on the recording position of a specified volume is extracted from the second management information in said recording medium to reproduce first management information on said specified volume from said recording medium based on said extracted information on the recording position.

34. A data reproduction method wherein when data recorded on a recording medium using said data recording method according to Claim 17 is reproduced, the information on the recording position of a specified data is extracted from the management information held in the storage section of said controlling apparatus to reproduce said specified data from said recording medium based on said extracted information on the recording position.

35. A data recording apparatus for recording digital data comprising at least a reproduction means for reproducing said digital data immediately after recording; a checking means for checking the reproduced data; a holding means for holding those data which are determined to have been reproduced incorrectly or information on those data; and a controller for allowing a re-recording operation to be performed after all said digital data have been recorded and until said data or information held in said holding means is determined to have been reproduced correctly.

36. A data recording apparatus according to Claim 35 wherein when performing the re-recording operation, said controller generates management information indicating to what part of the original digital data the data to be re-recorded corresponds and adds this information to the data for re-recording.

37. A data recording apparatus comprising a recording/reproduction signal converter and a head to record digital data, including at least a controller for checking after all said digital data have been recorded whether or not they have been recorded correctly and allowing a re-recording operation to be performed until those data which are determined to be unable to be reproduced correctly is determined to be able to be reproduced correctly.

38. A data recording apparatus according to Claim 37 wherein when performing the re-recording operation, said controller generates management information indicating to what part of the original digital data the data to be re-recorded corresponds and adds this information to the data for re-recording.

39. A data reproduction apparatus comprising:

a reading means for reading data and the data type information and/or copy management information on this data when reading this data from a data storage medium including a data region for storing data and an additional information region for storing as additional information, data type information used to identify the type of the stored data and copy management information used to manage the copying of the stored data;
a determination means for determining based on the contents of the read-out data type information and/or copy management information whether or not to add to said read-out data, all or part of said additional information corresponding to said data; and
an output controller using the results of the determination by said determination means to control the external output of said read-out data and said additional information through the switching means.

40. A data reproduction apparatus according to Claim 39 wherein said determination means can further determine based on the contents of said read-out data type information and/or copy management information whether or not to externally output said data.

41. A data reproduction apparatus according to Claim 39 wherein said reading means has a separator for separating said data from said additional information, and wherein:

said addition is made to said separated data based on the result of the determination by said determination means.

42. A data reproduction apparatus according to claim 39 wherein said data type information can identify whether or not said corresponding data is at least moving picture data and wherein if said data type information indicates that the data is at least moving picture data, said data is output to equipment or a transmission path that cannot determine the position or contents of said data type and copy management information.

Fig. 1

## F i g . 2

### (a)

HEAD RUNNING DIRECTION →

TRACKING INFORMATION RECORDING REGION

| | SOUND DATA RECORDING REGION | | IMAGE DATA RECORDING REGION | SUBCODE RECORDING REGION |

FIRST BUFFER REGION    SECOND BUFFER REGION    THIRD BUFFER REGION

### (b)

TRACKING INFORMATION RECORDING REGION

| | | STREAMER DATA AND ERROR CORRECTION CODE RECORDING REGION | SUBCODE RECORDING REGION |

FIRST BUFFER REGION

### (c)

TRACKING INFORMATION RECORDING REGION

| | | STREAMER DATA AND ERROR CORRECTION CODE RECORDING REGION | | SUBCODE RECORDING REGION |

FIRST BUFFER REGION    THIRD BUFFER REGION

### (d)

TRACKING INFORMATION RECORDING REGION

| | | STREAMER DATA RECORDING REGION | ERROR CORRECTION CODE RECORDING REGION | SUBCODE RECORDING REGION |

FIRST BUFFER REGION

### (e)

TRACKING INFORMATION RECORDING REGION

| | | STREAMER DATA RECORDING REGION | ERROR CORRECTION CODE RECORDING REGION | | SUBCODE RECORDING REGION |

FIRST BUFFER REGION    THIRD BUFFER REGION

Fig. 3

41 → IMAGE DATA PROCESSOR (42)
31 FIRST SELECTOR
33 IMAGE OUTER CODE ERROR CORRECTION ENCODER

43 → SOUND DATA PROCESSOR (44)
32 SECOND SELECTOR
34 SOUND OUTER CODE ERROR CORRECTION ENCODER

11 → INPUT DATA DISCRIMINATION CIRCUIT (12)
13
35 STREAMER OUTER CODE ERROR CORRECTION ENCODER

36 THIRD SELECTOR
37 INNER CODE ERROR CORRECTION ENCODER
46 RECORDING PATTERN GENERATOR
16 / 15
13

EP 0 821 359 A1

# F i g. 4

DUMMY GENERATOR — 112

INPUT

BLOCK CONVERTER — 111

RECORDING CIRCUIT — 101

102

103

EP 0 821 359 A1

Fig. 5

EP 0 821 359 A1

Fig. 6

INPUT

DATA RATE DETECTOR

131

BLOCK CONVERTER

111

RECORDING CIRCUIT

101

102

103

# F i g . 7

EP 0 821 359 A1

| ←——— N BYTE ———→ | ←——— N BYTE ———→ | 104 |
|---|---|---|
| PACKET 1 | PACKET 2 | PACKET 3 |

M BYTE
M BYTE

106          106          105

BLOCK 1    BLOCK 2          BLOCK L          BLOCK 2 L

BLOCK L – 1

Fig. 8

Fig. 9

X BLOCK

PACKET J2

TRACK H

TRACK 2

PACKET 2

PACKET 1

TRACK 1

L BLOCK

L BLOCK

DATA STORAGE REGION

# Fig. 10

BLOCK 144

BLOCK 10

BLOCK 9

BLOCK 1

PACKET 6

PACKET 1 ... PACKET 16, PACKET 15, PACKET 14, PACKET 13, PACKET 12

PACKET 11, PACKET 10, PACKET 9, PACKET 8, PACKET 7

PACKET 6, PACKET 5, PACKET 4, PACKET 3, PACKET 2

PACKET 1

PACKET 11

TRACK 3

TRACK 2

TRACK 1

DATA STORAGE REGION

DATA STORAGE REGION

**Fig. 11**

DATA STORAGE REGION

BLOCK

FRAME

DATA BLOCK

(N - M) DUMMY BLOCKS

Fig. 12

BLOCK

FRAME

DATA STORAGE
REGION

DATA BLOCK

DUMMY BLOCK

Fig. 13

131 : DATA RECORDING AND
        REPRODUCTION APPARATUS

130

132 : PC

134
RUNNING
CONTROL-
LING
SECTION

137 — MANAGEMENT
INFORMATION
REGION
SETTING
SECTION

138
TAPE CHECK
SECTION

135
CONTROLLER

133
DECK RECORD-
ING AND RE-
PRODUCTION
SECTION

136
INTER-
FACE

139
INTER-
FACE

DATA
FORMATTER

144

MANAGEMENT DATA
GENERATOR
145

142
HDD

141
MEMORY

140
CPU

143
CONNECTION
CHECK
SECTION

EP 0 821 359 A1

37

Fig. 14

VOLUME MANAGEMENT INFORMATION — Vol. 1, Vol. 2

VOLUME 1 DATA — Gap, DATA MANAGEMENT INFORMATION, Gap, ACTUAL DATA

VOLUME 2 DATA — DATA MANAGEMENT INFORMATION, Gap, ACTUAL DATA

Fig. 15

151
INTERFACE
CIRCUIT

152
SECOND
MANAGEMENT
INFORMATION
GENERATOR

153
DATA
ACCUMU-
LATOR

# Fig. 16

152 :SECOND MANAGEMENT
INFORMATION GENERATOR

161
VOLUME
LENGTH
MEASURING
DEVICE

162
VOLUME COPY
INFORMATION
MEASURING
DEVICE

163
VOLUME PRESENCE
INFORMATION
MEASURING DEVICE

164
IN-VOLUME
ALLOWABLE
RECORDING AMOUNT
MEASURING DEVICE

165
STORAGE MEDIUM
ALLOWABLE
RECORDING AMOUNT
MEASURING DEVICE

166
VOLUME
HISTORICAL
INFORMATION
MEASURING DEVICE

167
VOLUME REPRODUC-
TION SPEED
INFORMATION
MEASURING DEVICE

168
VOLUME
INFORMATION
MULTIPLIER

Fig. 17

TRACK LENGTH L

| TRACK NUMBER RECORDING REGION | | | | |
|---|---|---|---|---|
| VOLUME V1 RECORDING REGION | VOLUME V2 RECORDING REGION | ----------------- | VOLUME VN RECORDING REGION | ----------------- |

SECOND MANAGEMENT INFORMATION RECORDING REGION

VOLUME DATA RECORDING REGION

Fig. 18

186

INTERFACE
CIRCUIT

184

DATA
ACCUMULATOR

185

SECOND
MANAGEMENT
INFORMATION
OUTPUTTING
DEVICE

187

SECOND
MANAGEMENT
INFORMATION
INDICATOR

# Fig. 19

185 : SECOND MANAGEMENT INFORMATION
OUTPUTTING DEVICE

191

VOLUME
POSITION
MEASURING
DEVICE

192

VOLUME COPY
INFORMATION
MEASURING
DEVICE

193

VOLUME PRESENCE
INFORMATION
MEASURING
DEVICE

194

IN-VOLUME
ALLOWABLE
RECORDING AMOUNT
MEASURING
DEVICE

195

STORAGE MEDIUM
ALLOWABLE
RECORDING AMOUNT
MEASURING
DEVICE

196

VOLUME HISTORI-
CAL INFORMATION
MEASURING
DEVICE

197

VOLUME SPEED
INFORMATION
MEASURING
DEVICE

198

VOLUME
INFORMATION
SEPARATOR

Fig. 20

Fig. 21

| 216 | 212 |
|-----|-----|
| 214 | 210 |
| 212 | 208 |

| 208 | 204 |
|-----|-----|
| 206 | 202 |
|     | 200 |

Fig. 22

221 DATA ACCUMULATOR

222 RECORDED BLOCK NUMBER OBTAINING DEVICE

223 TRANSFERRED BLOCK NUMBER GENERATOR

186 INTERFACE CIRCUIT

224 SECOND MANAGEMENT INFORMATION REPRODUCTION DEVICE

187 SECOND MANAGEMENT INFORMATION INDICATOR

# Fig. 23

PARTITIONING MANAGEMENT INFORMATION UNASSIGNED REGION

DIRECTORY MANAGEMENT INFORMATION UNASSIGNED REGION

ACTUAL DATA UNASSIGNED REGION

TAPE RUNNING DIRECTION

HEAD SCANNING DIRECTION

304
316
301
306
307
311
320
319
303
302
305
310
309
308
313
312
314
317
315
318

FILE MANAGEMENT INFORMATION UNASSIGNED REGION

MANAGEMENT INFORMATION RECORDING REGION

ACTUAL DATA RECORDING REGION

EP 0 821 359 A1

Fig. 24

CONTROLLER 238

TAPE

I/O TERMINAL

TRANSCEIV-ER 231

FORMAT CONVERTER 232

RECORDED SIGNAL CONVERTER 233

234

DATA HOLDER 237

REPRODUCED SIGNAL CONVERTER 236

235

EP 0 821 359 A1

Fig. 25.

MANAGEMENT INFORMATION
ON DATA TO BE RE-RECORDED (D)

GAP REGION

RECORD DATA THAT MUST
BE RE-RECORDED(E)

GAP REGION

TAPE

RECORDED
DATA REGION

RECORD DATA(A)

RECORD DATA
THAT MUST BE
RE-
RECORDED(C)

UNUSED REGION

START RECORDING

END RECORDING

GAP REGION

GAP
REGION

MANAGEMENT INFORMATION
ON DATA FOR RE-RECORDING(B)

EP 0 821 359 A1

Fig. 26

255

CONTROLLER

TAPE

I/O TERMINAL

TRANSCEIV-
ER

FORMAT
CONVERTER

RECORDED/
REPRODUCED
SIGNAL
CONVERTER

251

252

253

254

Fig. 27

263  INTERFACE CIRCUIT

262  DATA CONVERTER

261  DATA ACCUMULATOR

264  COMMAND ANALYZER

Fig. 28

262

273 DATA INFORMATION SEPARATOR

274 DATA TYPE INFORMATION OBTAINING DEVICE

275 COPY MANAGEMENT INFORMATION OBTAINING DEVICE

276 INFORMATION ADDER

277

278

279 SWITCH

DATA CONVERTER

Fig. 29

| DATA TYPE INFORMATION | COPY MANAGEMENT INFORMATION | ACTUAL DATA |
|---|---|---|

← ---------- DATA LENGTH n ---------- →

## INTERNATIONAL SEARCH REPORT

| | International application No. |
|---|---|
| | PCT/JP97/00308 |

| A. CLASSIFICATION OF SUBJECT MATTER |
|---|
| Int. Cl$^6$  G11B20/10, 20/12 |

According to International Patent Classification (IPC) or to both national classification and IPC

| B. FIELDS SEARCHED |
|---|
| Minimum documentation searched (classification system followed by classification symbols) |
| Int. Cl$^6$  G11B20/10, 20/12 |

Documentation searched other than minimum documentation to the extent that such documents are included in the fields searched

| Jitsuyo Shinan Koho | 1940 – 1997 | Jitsuyo Shinan Toroku |
|---|---|---|
| Kokai Jitsuyo Shinan Koho | 1971 – 1997 | Koho   1996 – 1997 |
| Toroku Jitsuyo Shinan Koho | 1994 – 1997 | |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP, 7-203365, A (Sony Corp.), August 4, 1995 (04. 08. 95)(Family: none) | 1 – 14 |
| A | JP, 7-254233, A (Sony Corp.), October 3, 1995 (03. 10. 95)(Family: none) | 1 – 14 |
| A | JP, 8-501174, A (Ampex Systems Corp.), February 6, 1996 (06. 02. 96) & WO, 93/17425, A1 | 17 – 38 |

| ☐ Further documents are listed in the continuation of Box C. | ☐ See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| June 23, 1997 (23. 06. 97) | July 1, 1997 (01. 07. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)